# EUROPEAN PATENT APPLICATION

(11) **EP 4 794 417 A1**
(43) Date of publication of application: **19.08.2026**
(21) Application number: 24893140.4
(22) Date of filing: 23.10.2024
(51) Int. Cl.: H04W 72/0453

(54) **COMMUNICATION METHOD AND APPARATUS BASED ON CONFIGURATION OF MODULATION AND CODING SCHEME**

(30) Priority: 23.11.2023 CN 202311582315
(71) Applicant: HUAWEI TECHNOLOGIES CO., LTD., Shenzhen, Guangdong 518129 (CN)
(72) Inventor: FU, Yu, Shenzhen, Guangdong 518129 (CN); QIN, Yi, Shenzhen, Guangdong 518129 (CN); CAO, Youlong, Shenzhen, Guangdong 518129 (CN); PANG, Xu, Shenzhen, Guangdong 518129 (CN)
(74) Representative: Gill Jennings & Every LLP
(86) International application number: PCT/CN2024/126853
(87) International publication number: WO 2025/107981

(57) **Abstract**

A modulation and coding scheme configuration-based communication method and an apparatus are provided. The method includes: a first communication apparatus receives first information, where the first information may indicate a first resource and a second resource, and the first information may further indicate a first MCS corresponding to the first resource and a second MCS corresponding to the second resource; and then, the first communication apparatus determines, based on a data volume of first data, to use the first resource and the first MCS to transmit the first data, or to use the second resource and the second MCS to transmit the first data. The first information indicates the first resource and the second resource, and indicates the first MCS corresponding to the first resource and the second MCS corresponding to the second resource, so that the first communication apparatus can flexibly determine, based on the data volume of the first data, to use a matched resource and MCS to transmit the first data. In this way, coding efficiency and transmission reliability can be better balanced, thereby improving coding efficiency and transmission reliability.

## Description

### CROSS-REFERENCE TO RELATED APPLICATIONS

This application claims priority to Chinese Patent Application No. 202311582315.7, filed with the China National Intellectual Property Administration on November 23, 2023 and entitled "MODULATION AND CODING SCHEME CONFIGURATION-BASED COMMUNICATION METHOD AND APPARATUS", which is incorporated herein by reference in its entirety.

### TECHNICAL FIELD

This application relates to the field of communication technologies, and in particular, to a modulation and coding scheme configuration-based communication method and an apparatus.

### BACKGROUND

In recent years, with continuous progress and improvement of an extended reality (extended reality, XR) technology, related industries have been vigorously developed. Nowadays, the XR technology has entered various fields, for example, education, entertainment, military affairs, medical care, environmental protection, transportation, and public health, closely related to production and life of people. XR is a general term for various reality-related technologies, and specifically includes virtual reality (virtual reality, VR), augmented reality (augmented reality, AR), and mixed reality (mixed reality, MR).

The virtual reality technology is mainly rendering visual and audio scenes to simulate, as much as possible, sensory stimuli of vision and audio in a real world to a user. The virtual reality technology usually requires the user to wear a head mounted display (head mounted display, HMD) to completely replace a visual field of the user with a simulated visual component, and requires the user to wear a headset to provide the user with accompanying audio. The augmented reality technology is mainly providing additional visual or auditory information or artificially generated content in a real environment perceived by a user. The user may obtain the real environment directly, that is, without intermediate sensing, processing, and rendering, or indirectly, that is, through transfer via a sensor or the like and further enhancement processing or the like. The mixed reality technology is an advanced form of AR. One of implementations of the mixed reality technology is inserting some virtual elements into a physical scene, to provide a user with immersive experience in which the elements are a part of a real scene.

As a new service, a multi-modal service has an additional haptic experience dimension on the basis of XR, so that remote touch and remote control can be implemented, and multi-faceted remote perception can be implemented in vision, hearing, haptic sense, kinesthesis, and the like. Therefore, the multi-modal service has great development space in related fields such as industrial automation, medical care, and remote education, provides a user with comprehensive interactive experience, and has great application value and business potential.

In a communication network, when a terminal device transmits data, a base station usually needs to allocate a resource to transmit uplink data. However, because configuration flexibility of a modulation and coding scheme (modulation and coding scheme, MCS) is relatively poor, problems such as low coding efficiency and low transmission reliability exist in a process in which the terminal device transmits data by using a resource allocated by the base station.

### SUMMARY

This application provides a modulation and coding scheme configuration-based communication method and an apparatus, to improve coding efficiency and transmission reliability.

According to a first aspect, this application provides a modulation and coding scheme configuration-based communication method. The method may be performed by a first communication apparatus. Optionally, the first communication apparatus may be a terminal device or a module (for example, a processor, a processing unit, a chip, a chip system, or a circuit) of the terminal device. The method may alternatively be implemented by a logical node, a logical module, or software that can implement all or some functions of the terminal device. For example, in the following, a terminal device performs the communication method. The method may include the following steps: The terminal device receives first information. The first information may indicate a first resource and a second resource, and the first information may further indicate a first MCS corresponding to the first resource and a second MCS corresponding to the second resource. Then, the terminal device determines, based on a data volume of first data, to use the first resource and the first MCS to transmit the first data, or to use the second resource and the second MCS to transmit the first data.

In the method, the first information indicates the first resource and the second resource, and indicates the first MCS corresponding to the first resource and the second MCS corresponding to the second resource, so that the terminal device can flexibly (or dynamically) determine, based on the data volume of the first data, to use a matched resource and MCS to transmit the first data. In this way, coding efficiency and transmission reliability can be better balanced, thereby improving coding efficiency and transmission reliability, and flexible MCS configuration can be implemented.

In a possible design, that the terminal device determines, based on the data volume of the first data, to use the first resource and the first MCS to transmit the first data includes: when the data volume of the first data is less than a first threshold, the terminal device determines to use the first resource and the first MCS to transmit the first data.

In a further design, when the data volume of the first data is less than or equal to the first threshold, the terminal device may also determine to use the first resource and the first MCS to transmit the first data.

In the foregoing design, when determining that the data volume of the first data is less than the first threshold, or the data volume of the first data is less than or equal to the first threshold, the terminal device may effectively determine, in a timely manner, to use the first resource and the first MCS to transmit the first data. In this way, a resource and an MCS that are used to transmit the first data can match the data volume of the first data, to help implement proper use of a resource and an MCS, and avoid a waste of a resource as much as possible, thereby implementing a balance between coding efficiency and transmission reliability. In other words, in this case, the terminal device considers that the first resource can bear the first data, and therefore uses the first resource to bear the first data. In this case, a modulation and coding scheme correspondingly used is the first MCS.

In a possible design, that the terminal device determines, based on the data volume of the first data, to use the second resource and the second MCS to transmit the first data includes: when the data volume of the first data is greater than the first threshold, the terminal device determines to use the second resource and the second MCS to transmit the first data.

In a further design, when the data volume of the first data is greater than or equal to the first threshold, the terminal device may also determine to use the second resource and the second MCS to transmit the first data.

In the foregoing design, when determining that the data volume of the first data is greater than the first threshold, or the data volume of the first data is greater than or equal to the first threshold, the terminal device may effectively determine, in a timely manner, to use the second resource and the second MCS to transmit the first data. In this way, a resource and an MCS that are used to transmit the first data can match the data volume of the first data, to help implement proper use of a resource and an MCS, so that the terminal device has sufficient resources to transmit the first data, to improve a transmission success rate of the first data, thereby implementing a balance between coding efficiency and transmission reliability. In other words, in this case, the terminal device considers that the first resource cannot bear the first data, and therefore uses the second resource to bear the first data. In this case, a modulation and coding scheme correspondingly used is the second MCS.

In a possible design, the method further includes: first, the terminal device may determine a bearable data volume of the first resource based on the first resource and the first MCS; and then, the terminal device may determine the first threshold based on the bearable data volume of the first resource.

Optionally, the first threshold may be predefined, or may be configured by a second communication apparatus (for example, a network device).

In the foregoing design, the first threshold is determined based on a bearer capability of the first resource, so that the first threshold can be determined in more accordance with an actual status (for example, an actual bearer status of a resource). In this way, a to-be-used resource can be more accurately determined, so that a resource and an MCS can be selected more properly and in more accordance with an actual data volume of the first data.

In a possible design, the method further includes: the terminal device sends second information, where the second information may indicate one or more of the following: use statuses of the first resource and the second resource, and use statuses of the first MCS and the second MCS.

For example, the use statuses of the first resource and the second resource may indicate a used resource in the first resource or the second resource. For example, if the first resource is used, the second resource is not used; or if the second resource is used, the first resource is not used. The use statuses of the first MCS and the second MCS may indicate a used MCS in the first MCS or the second MCS. For example, if the first MCS is used, the second MCS is not used; or if the second MCS is used, the first MCS is not used.

For example, when it is determined to use the first resource and the first MCS to transmit the first data, the second information indicates that the first resource is used and/or indicates that the first MCS is used. For another example, when it is determined to use the second resource and the second MCS to transmit the first data, the second information indicates that the second resource is used and/or indicates that the second MCS is used.

In the foregoing design, the second information is sent, so that a receive end (for example, the second communication apparatus) can know, in a timely manner, a resource and/or an MCS that are/is used by the terminal device to transmit the first data. Therefore, the receive end can effectively receive, in a timely manner, the first data based on the resource and the MCS that are used to transmit the first data. In this way, in the design, the receive end can unnecessarily perform blind detection, to help reduce energy consumption overheads caused by blind detection of the receive end.

In a possible design, the method further includes: the terminal device may determine, based on a code rate corresponding to a reference MCS and a scale factor corresponding to the reference MCS, a first code rate corresponding to the second information, where the reference MCS is the first MCS or the second MCS; and
that the terminal device sends the second information includes: the terminal device sends the second information based on the first code rate.

In the foregoing design, the first code rate is determined in a more flexible manner, and may be determined by using a code rate corresponding to either of the first MCS or the second MCS. Then, the terminal device may effectively send the second information based on the determined first code rate.

In a possible design, the second resource includes the first resource, and a bearable data volume of the second resource is greater than the bearable data volume of the first resource.

For example, that the second resource further includes the first resource may be understood as that the second resource includes another resource in addition to the first resource.

In the foregoing design, the bearable data volume of the second resource is set to be greater than the bearable data volume of the first resource, so that the terminal device can flexibly select (or determine to use) a matched resource based on the data volume of the first data to transmit the first data.

In a possible design, the first MCS is higher than the second MCS.

In the foregoing design, the first MCS is set to be higher than the second MCS, so that different MCSs can be flexibly selected to transmit the first data. In addition, when the second resource includes the first resource, the first MCS is set to be higher than the second MCS, so that there can be a correspondence between a size of a resource and a level of an MCS (for example, an MCS corresponding to a larger resource is lower than an MCS corresponding to a smaller resource). In this way, the terminal device can flexibly select a matched resource and MCS based on the data volume of the first data to transmit the first data, thereby better balancing coding efficiency and transmission reliability.

According to a second aspect, this application provides a modulation and coding scheme configuration-based communication method. The method may be performed by a second communication apparatus. Optionally, the second communication apparatus may be a network device or a module (for example, a processor, a processing unit, a chip, a chip system, or a circuit) of the network device. The method may alternatively be implemented by a logical node, a logical module, or software that can implement all or some functions of the network device. For example, in the following, a network device performs the communication method. The method may include the following steps: The network device sends first information. The first information may indicate a first resource and a second resource, and the first information may further indicate a first MCS corresponding to the first resource and a second MCS corresponding to the second resource. Then, when a first communication apparatus (for example, a terminal device) does not send second information, the network device attempts to receive the first data based on the first resource and the first MCS, and attempts to receive the first data based on the second resource and the second MCS. When the first communication apparatus (for example, the terminal device) sends the second information, the network device receives the first data based on the second information.

In a possible design, the method further includes: the network device receives the second information, where the second information may indicate one or more of the following: use statuses of the first resource and the second resource, and use statuses of the first MCS and the second MCS.

In a possible design, that the network device receives the second information includes: the network device receives encoded second information; and then, the network device decodes the encoded second information to obtain the second information.

In a possible design, the second resource includes the first resource, and a bearable data volume of the second resource is greater than a bearable data volume of the first resource.

In a possible design, the first MCS is higher than the second MCS.

For technical effects that can be achieved in the second aspect, refer to the technical effects that can be achieved in the first aspect. Details are not described herein again.

According to a third aspect, this application provides a modulation and coding scheme configuration-based communication method. The method may be performed by a first communication apparatus. Optionally, the first communication apparatus may be a terminal device or a module (for example, a processor, a processing unit, a chip, a chip system, or a circuit) of the terminal device. The method may alternatively be implemented by a logical node, a logical module, or software that can implement all or some functions of the terminal device. For example, in the following, a terminal device performs the communication method. The method may include the following steps: The terminal device receives third information. The third information may indicate a third resource, and the third resource corresponds to at least two MCSs. Then, the terminal device may determine a target MCS based on a data volume of second data. The target MCS is one of the at least two MCSs. Then, the terminal device may use the third resource and the target MCS to transmit the second data.

In the method, the third information indicates the third resource, and indicates that the third resource corresponds to the at least two MCSs, so that the terminal device can flexibly (or dynamically) select a matched MCS based on the data volume of the second data to transmit the second data. In this way, coding efficiency and transmission reliability can be improved, and flexible MCS configuration can be implemented.

In a possible design, the at least two MCSs include a third MCS and a fourth MCS, and the third MCS is higher than the fourth MCS; and
that the terminal device determines the target MCS based on the data volume of the second data includes: when the data volume of the second data is less than a second threshold, the terminal device may determine that the target MCS is the fourth MCS.

In a further design, when the data volume of the second data is less than or equal to the second threshold, the terminal device may also determine that the target MCS is the fourth MCS.

In the foregoing design, when determining that the data volume of the second data is less than the second threshold, or the data volume of the second data is less than or equal to the second threshold, the terminal device may effectively determine, in a timely manner, to use the fourth MCS to transmit the second data. In this way, an MCS used to transmit the second data can match the data volume of the second data, to help implement proper use of an MCS.

In a possible design, the at least two candidate MCSs include a third MCS and a fourth MCS, and the third MCS is higher than the fourth MCS; and
that the terminal device determines the target MCS based on the data volume of the second data includes: when the data volume of the second data is greater than the second threshold, the terminal device may determine that the target MCS is the third MCS.

In a further design, when the data volume of the second data is greater than or equal to the second threshold, the terminal device may also determine that the target MCS is the third MCS.

In the foregoing design, when determining that the data volume of the second data is greater than the second threshold, or the data volume of the second data is greater than or equal to the second threshold, the terminal device may effectively determine, in a timely manner, to use the third MCS to transmit the second data. In this way, an MCS used to transmit the second data can match the data volume of the second data, to help implement proper use of an MCS.

In a possible design, the method further includes: the terminal device may determine a bearable data volume of the third resource based on the third resource and the third MCS or the fourth MCS; and then, the terminal device may determine the second threshold based on the bearable data volume of the third resource.

Optionally, the second threshold may be predefined, or may be configured by a second communication apparatus (for example, a network device).

In the foregoing design, the second threshold is determined based on the bearable data volume of the third resource, so that the second threshold can be determined in more accordance with an actual status (for example, an actual bearer status of a resource). In this way, a to-be-used MCS can be more accurately determined, so that an MCS can be selected more properly and in more accordance with an actual data volume of the second data.

In a possible design, the method further includes: the terminal device sends fourth information, where the fourth information may indicate use statuses of the at least two MCSs.

For example, the use statuses of the at least two MCSs may indicate a used MCS in the at least two MCSs. For example, if the third MCS included in the at least two MCSs is used, another MCS included in the at least two MCSs is not used; or if the fourth MCS included in the at least two MCSs is used, another MCS included in the at least two MCSs is not used.

For example, the at least two MCSs include a third MCS and a fourth MCS. When it is determined to use the third resource and the third MCS to transmit the second data, the fourth information indicates that the third MCS is used. When it is determined to use the third resource and the fourth MCS to transmit the second data, the fourth information indicates that the fourth MCS is used.

In the foregoing design, the fourth information is sent, so that a receive end (for example, the second communication apparatus) can know, in a timely manner, an MCS used by the terminal device to transmit the second data. Therefore, the receive end can effectively receive, in a timely manner, the second data based on the third resource and the MCS used to transmit the second data. In this way, in the design, the receive end can unnecessarily perform blind detection, to help reduce energy consumption overheads caused by blind detection of the receive end.

In a possible design, the method further includes: the terminal device may determine, based on a code rate corresponding to a reference MCS and a scale factor corresponding to the reference MCS, a second code rate corresponding to fourth information, where the reference MCS is one of the at least two MCSs; and
that the terminal device sends the fourth information includes: the terminal device may send the fourth information based on the second code rate.

In the foregoing design, the second code rate is determined in a more flexible manner, and may be determined by using a code rate corresponding to any one of the at least two MCSs. Then, the terminal device may effectively send the fourth information based on the determined second code rate.

According to a fourth aspect, this application provides a modulation and coding scheme configuration-based communication method. The method may be performed by a second communication apparatus. Optionally, the second communication apparatus may be a network device or a module (for example, a processor, a processing unit, a chip, a chip system, or a circuit) of the network device. The method may alternatively be implemented by a logical node, a logical module, or software that can implement all or some functions of the network device. For example, in the following, a network device performs the communication method. The method may include the following steps: The network device sends third information. The third information may indicate a third resource, and the third resource corresponds to at least two MCSs. Then, when a first communication apparatus (for example, a terminal device) does not send fourth information, the network device may separately attempt to receive the second data on the third resource based on the at least two MCSs. When the first communication apparatus (for example, the terminal device) sends the fourth information, the network device may receive the second data based on the fourth information.

In a possible design, the method further includes: the network device receives the fourth information, where the fourth information may indicate use statuses of the at least two MCSs.

In a possible design, that the network device receives the second information includes: the network device receives encoded fourth information; and then, the network device decodes the encoded fourth information to obtain the fourth information.

For technical effects that can be achieved in the fourth aspect, refer to the technical effects that can be achieved in the third aspect. Details are not described herein again.

According to a fifth aspect, this application provides a communication apparatus. Optionally, the communication apparatus may be a communication device (for example, a first communication apparatus or a second communication apparatus) or a module (for example, a processor, a processing unit, a chip, a chip system, or a circuit) required for supporting the communication device in implementing the communication method. For example, the first communication apparatus may be a terminal device or a module (for example, a processor, a processing unit, a chip, a chip system, or a circuit) of the terminal device, or may be a logical node, a logical module, or software that can implement all or some functions of the terminal. The second communication apparatus may be a network device or a module (for example, a processor, a processing unit, a chip, a chip system, or a circuit) of the network device, or may be a logical node, a logical module, or software that can implement all or some functions of the network device. When the communication apparatus is a chip disposed in the first communication apparatus (or the second communication apparatus), the communication apparatus includes a communication interface and a processor, and does not include a memory. The communication interface exists as an input/output interface, and the input/output interface is used by the chip to implement receiving/sending of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that corresponding functions of the first communication apparatus (or the second communication apparatus) are implemented. Optionally, when the chip implements the corresponding functions of the first communication apparatus (or the second communication apparatus) in the communication method embodiments provided in this application, the input/output interface may implement a receiving/sending operation performed by the first communication apparatus (or the second communication apparatus) in the communication method embodiments provided in this application, and the processor may implement an operation, other than the receiving/sending operation, performed by the first communication apparatus (or the second communication apparatus) in the communication method embodiments provided in this application.

In a possible design, the communication apparatus has a function of implementing behavior in the method instance in the first aspect, the second aspect, the third aspect, or the fourth aspect. For beneficial effects, refer to the related descriptions in the first aspect to the fourth aspect. Details are not described herein again. The function may be implemented by hardware, or may be implemented by hardware executing corresponding software. The hardware or the software includes one or more modules corresponding to the foregoing function. For example, the communication apparatus may be the terminal device in the first aspect or the third aspect, or the communication apparatus may be the network device in the second aspect or the fourth aspect. For example, the communication apparatus includes a corresponding means (means) or module configured to perform the method in the first aspect, the second aspect, the third aspect, or the fourth aspect. For example, the communication apparatus includes a processing module (that may alternatively be referred to as a processing unit) and/or a transceiver module (that may alternatively be referred to as a communication unit, a communication module, or a transceiver unit, configured to send and receive data). The transceiver module can implement a sending function and a receiving function. When implementing the sending function, the transceiver module may be referred to as a sending unit (that may alternatively be referred to as a sending module). When implementing the receiving function, the transceiver module may be referred to as a receiving unit (that may alternatively be referred to as a receiving module). The sending unit and the receiving unit may be a same functional unit, the functional unit is referred to as a transceiver module, and the functional unit can implement the sending function and the receiving function. Alternatively, the sending unit and the receiving unit may be different functional units, and the transceiver module is a general term for these functional units. These modules (units) may perform corresponding functions in the method examples in the first aspect, the second aspect, the third aspect, or the fourth aspect. For details, refer to detailed descriptions in the method examples. Details are not described herein again.

According to a sixth aspect, this application provides a communication apparatus. The communication apparatus may be a communication apparatus (for example, a first communication apparatus or a second communication apparatus) required for performing the communication method provided in this application, may be a device including the communication apparatus required for performing the communication method provided in this application, or may be a device having a function required for implementing the communication method. The communication apparatus may include a communication interface and a processor. Optionally, the communication apparatus may further include a memory. The memory is configured to store a computer program or instructions. The processor is coupled to the memory and the communication interface. When the processor executes the computer program or the instructions, the communication apparatus is enabled to perform the method in any possible design of the first aspect, the method in any possible design of the second aspect, the method in any possible design of the third aspect, or the method in any possible design of the fourth aspect.

According to a seventh aspect, this application provides a communication system. The communication system may include the first communication apparatus (for example, a terminal device) and the second communication apparatus (for example, a network device) in the first aspect, the second aspect, the third aspect, or the fourth aspect. For implementations of related functions of the first communication apparatus or the second communication apparatus, refer to the related descriptions in the first aspect, the second aspect, the third aspect, or the fourth aspect. Details are not described herein again.

For example, the communication system may include one or more first communication apparatuses and one or more second communication apparatuses.

According to an eighth aspect, this application provides a computer program product. The computer program product includes a computer program or instructions. When the computer program is or the instructions are run on a computer, the computer is enabled to perform the method in any possible design of the first aspect, the method in any possible design of the second aspect, the method in any possible design of the third aspect, or the method in any possible design of the fourth aspect.

According to a ninth aspect, this application provides a computer-readable storage medium. The computer-readable storage medium stores a computer program or instructions. When the computer program is or the instructions are executed by a computer, the computer is enabled to perform the method in any possible design of the first aspect, the method in any possible design of the second aspect, the method in any possible design of the third aspect, or the method in any possible design of the fourth aspect.

According to a tenth aspect, this application provides a chip. The chip may include a processor, and may further include a memory (or the chip is coupled to a memory). The chip executes program instructions in the memory, to perform the method in any possible design of the first aspect, the method in any possible design of the second aspect, the method in any possible design of the third aspect, or the method in any possible design of the fourth aspect. The term "coupled" means that two components are directly or indirectly combined with each other. For example, coupling may mean an electrical connection between the two components. Alternatively, the chip may not include a memory.

According to an eleventh aspect, this application further provides a chip system. The chip system includes a processor, configured to support a computer apparatus in implementing the method in any possible design of the first aspect, the method in any possible design of the second aspect, the method in any possible design of the third aspect, or the method in any possible design of the fourth aspect. In a possible design, the chip system further includes a memory, and the memory is configured to store a program and data that are necessary for the computer apparatus. The chip system may include a chip, or may include a chip and another discrete component.

Based on the implementations provided in the foregoing aspects, further combination may be performed in this application to provide more implementations.

### BRIEF DESCRIPTION OF DRAWINGS

FIG. 1 is an example of a diagram of an architecture of a communication system according to an embodiment of this application;
FIG. 2 is an example of a schematic flowchart of a communication method according to an embodiment of this application;
FIG. 3a and FIG. 3b each are an example of a diagram of selecting a corresponding resource and MCS based on a data volume of first data to transmit the first data according to an embodiment of this application;
FIG. 4 to FIG. 6 are examples of schematic flowcharts of several other communication methods according to embodiments of this application;
FIG. 7a and FIG. 7b each are an example of a diagram of selecting a corresponding MCS based on a data volume of second data to transmit the second data according to an embodiment of this application;
FIG. 8 and FIG. 9 are examples of schematic flowcharts of several other communication methods according to embodiments of this application; and
FIG. 10 and FIG. 11 each are an example of a diagram of a structure of a communication apparatus according to an embodiment of this application.

### DESCRIPTION OF EMBODIMENTS

Before technical solutions provided in this application are described, some terms in this application are first explained and described, to facilitate understanding by a person skilled in the art.

Modulation and coding scheme (modulation and coding scheme, MCS): The MCS defines a quantity of valid bits that one resource element (resource element, RE) (that may alternatively be referred to as one resource unit or one resource particle) can bear. A larger index of an MCS indicates a larger quantity of bearable valid bits.

For example, the MCS defines two parts: a modulation (modulation) scheme and a coding rate (coding rate).

For the modulation scheme, optional modulation schemes supported in 5th generation (5th generation, 5G) new radio (new radio, NR) include quadrature phase shift keying (quadrature phase shift keying, QPSK), 16 quadrature amplitude modulation (quadrature amplitude modulation, QAM), 64 QAM, and 256 QAM. Each RE can transmit 2 bits of information through QPSK, can transmit 4 bits through 16 QAM, can transmit 6 bits through 64 QAM, and can transmit 8 bits through 256 QAM.

For the coding rate, namely, a rate of useful bits to total transmitted bits (useful bits and redundant bits), is used to measure redundancy added at a physical layer. The redundant bits are used for forward error correction (forward error correction, FEC) A lower coding rate indicates more added redundancy.

It should be noted that in embodiments of this application, "sending information" may be understood as that a device sends information to another device, or may be understood as that a logical module in a device sends information to another logical module. For example, "a RAN node sends information" may be understood as that the RAN node sends the information to another device (for example, a terminal device), or may be understood as that a logical module 1 in the RAN node sends the information to a logical module 2 in the terminal device.

In embodiments of this application, "receiving information" may be understood as that a device receives the information from another device, or may be understood as that a logical module in the device receives the information from another logical module. For example, "a RAN node receives information" may be understood as that the RAN node receives the information from another device (for example, a terminal device), or may be understood as that a logical module 1 in the RAN node receives the information from a logical module 2 in the terminal device.

In embodiments of this application, "sending information to a terminal device" may be understood as that a destination end of the information is the terminal, and may include directly or indirectly sending the information to the terminal; and "receiving information from a terminal" may be understood as that a source end of the information is the terminal, and may include directly or indirectly receiving the information from the terminal. Necessary processing, for example, a format change, may be performed on information between a source end and a destination end between which the information is sent, but the destination end can understand valid information from the source end. Similar descriptions in embodiments of this application may be understood similarly. Details are not described herein.

The following describes in detail embodiments of this application with reference to accompanying drawings.

The following describes an architecture of a communication system to which a communication method provided in this application is applicable. It should be noted that these descriptions are intended for ease of understanding by a person skilled in the art, and are not intended to limit the protection scope claimed by this application.

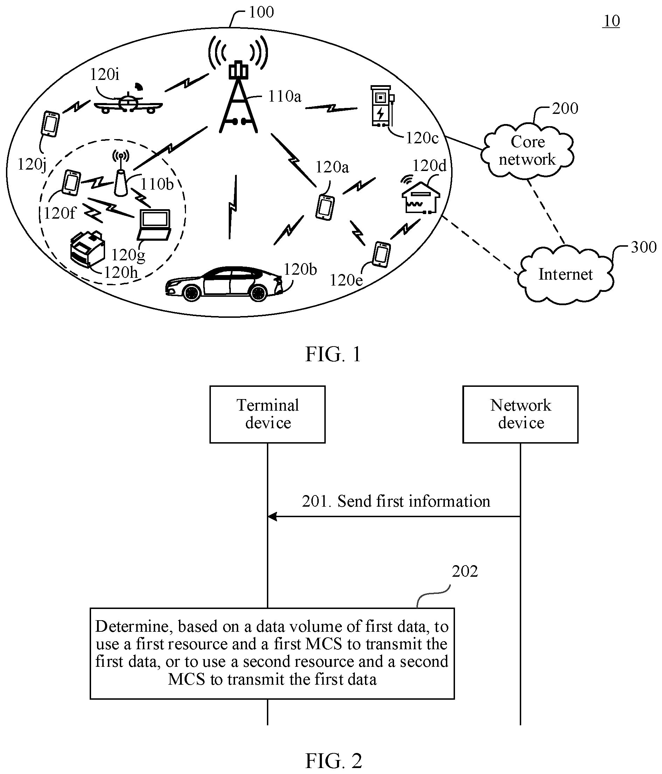

FIG. 1 is an example of a diagram of an architecture of a communication system to which embodiments of this application are applicable. As shown in FIG. 1, the architecture of the communication system includes a radio access network (radio access network, RAN) 100 and a core network (core network, CN) 200. Optionally, the architecture of the communication system may further include an internet 300. The RAN 100 includes at least one RAN node (for example, 110a and 110b in FIG. 1, collectively referred to as 110) and at least one terminal device (for example, 120a to 120j in FIG. 1, collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may be different physical devices, may be a same physical device that integrates logical functions of the core network and logical functions of the radio access network, or may be one physical device that integrates some logical functions of the core network and some logical functions of the radio access network.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, a network device, an access node, or the like sometimes, and constitutes a part of the communication system, to help the terminal device implement radio access. A plurality of RAN nodes 110 in the communication system 10 may be nodes of a same type, or may be nodes of different types. In some scenarios, roles of the RAN node 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. Both the RAN node 110 and the terminal device 120 are sometimes referred to as communication apparatuses. For example, in FIG. 1, the network elements 110a and 110b may be understood as communication apparatuses having base station functions, and the network elements 120a to 120j may be understood as communication apparatuses having terminal device functions. Optionally, the RAN node 110 may be deployed on land, including indoor, outdoor, handheld, or vehicle-mounted, may be deployed on water, or may be deployed on an airplane, an uncrewed aerial vehicle, a balloon, or a satellite in the air. An application scenario of the RAN node is not limited in this embodiment of this application.

In a possible scenario, the RAN node may be a base station (base station), an evolved NodeB (evolved NodeB, eNodeB), an access point (access point, AP), a transmission reception point (transmission reception point, TRP), new radio (new radio, NR), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may be a server, a wearable device, a vehicle, a vehicle-mounted device, or the like. For example, an access network device in a vehicle-to-everything (vehicle to everything, V2X) technology may be a roadside unit (roadside unit, RSU). All or some functions of the RAN node in this application may alternatively be implemented by using a software function run on hardware, or may be implemented by using a virtualization function instantiated on a platform (for example, a cloud platform). The RAN node in this application may alternatively be a logical node, a logical module, or software that can implement all or some functions of the RAN node.

In another possible scenario, a plurality of RAN nodes coordinate to assist the terminal device in implementing wireless access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In this network architecture, signaling generated by the CU may be sent to the terminal device through the DU, or signaling generated by the terminal device may be sent to the CU through the DU. The DU may transparently transmit the signaling to the terminal device or the CU by directly encapsulating the signaling at a protocol layer without parsing the signaling. In this network architecture, the CU is classified as a network device on a radio access network side. In addition, the CU may alternatively be classified as a network device on a core network side. This is not limited in this application.

In different systems, the CU (or the CU-CP and the CU-UP), the DU, or the RU may also have different names, but a person skilled in the art can understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The terminal device may also be referred to as a terminal, user equipment (user equipment, UE), an access terminal device, a vehicle-mounted terminal, an industrial control terminal, a UE unit, a UE station, a mobile station (mobile station, MS), a mobile terminal (mobile terminal, MT), a remote station, a remote terminal device, a mobile device, a UE terminal device, a wireless communication device, a UE agent, a UE apparatus, or the like. In this embodiment of this application, the terminal device 120 may be at a fixed location, or may be mobile. This is not limited in implementations of this application. Optionally, the terminal device 120 may be deployed on land, including indoor, outdoor, handheld, or vehicle-mounted, may be deployed on water (for example, on a ship), or may be deployed in air (for example, on an airplane, a balloon, or a satellite).

For example, the terminal device may be a mobile phone (mobile phone), a tablet computer (Pad), customer-premises equipment (customer-premises equipment, CPE), a subscriber unit (subscriber unit), a cellular phone (cellular phone), a smartphone (smartphone), a wireless data card, a personal digital assistant (personal digital assistant, PDA) computer, a wireless modem (modem), a handheld device (handset), a laptop computer (laptop computer), a computer with a wireless receiving/sending function, a virtual reality (virtual reality, VR) terminal device, an augmented reality (augmented reality, AR) terminal device, a head mounted display (head mounted display, HMD), a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation security (transportation safety), a wireless terminal in a smart city (smart city), a wireless terminal in a smart home (smart home), a wearable terminal device, a vehicle, an uncrewed aerial vehicle, a helicopter, an airplane, a factory machine/device, a machine type communication (machine type communication, MTC) terminal, a ship, or a robot. Neither a specific technology nor a specific device form used by the terminal device is limited in this embodiment of this application.

It may be understood that, the RAN node and the terminal device may communicate with each other by using a licensed spectrum (licensed spectrum), may communicate with each other by using an unlicensed spectrum (unlicensed spectrum), or may communicate with each other by using both the licensed spectrum and the unlicensed spectrum. The network device and the terminal device may communicate with each other by using a spectrum below a 6th generation mobile communication system (6th generation mobile networks or 6th generation wireless systems, 6G), may communicate with each other by using a spectrum above 6G, or may communicate with each other by using both the spectrum below 6G and the spectrum above 6G. A spectrum resource used between the RAN node and the terminal device is not limited in this embodiment of this application.

Optionally, the communication system shown in FIG. 1 may be various communication systems, for example, may be an internet of things (internet of things, IoT) system, a narrowband internet of things (narrowband internet of things, NB-IoT) system, or a long term evolution (long term evolution, LTE) system, may be a 5th generation mobile communication system (5th generation mobile networks or 5th generation wireless systems, 5G), may be an LTE and 5G hybrid architecture, or may be a 5G new radio (new radio, NR) system, a new communication system emerging in 6G or future communication development, or the like. This is not limited in this embodiment of this application. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network. In addition, the architecture of the communication system shown in FIG. 1 is intended to describe technical solutions in embodiments of this application more clearly, and do not constitute a limitation on the technical solutions provided in embodiments of this application. A person of ordinary skill in the art may learn that, with evolution of architectures of communication systems and emergence of new service scenarios, the technical solutions provided in embodiments of this application are also applicable to similar technical problems.

Based on the architecture of the communication system shown in FIG. 1, the following describes in detail specific implementations of the communication method in embodiments of this application with reference to the accompanying drawings. It may be understood that, in this application, an example in which a network device and a terminal device serve as execution bodies of an interaction example is used for description. However, the execution bodies of the interaction example are not limited in this application. For example, a method performed by the network device in this application may alternatively be performed by a module (for example, a chip, a chip system, or a processor) used in the network device, or may be implemented by a logical node, a logical module, or software that can implement all or some functions of the network device. A method performed by the terminal device in this application may alternatively be performed by a module (for example, a chip, a chip system, or a processor) used in the terminal device, or may be implemented by a logical node, a logical module, or software that can implement all or some functions of the terminal device.

FIG. 2 is an example of a schematic flowchart of a communication method according to an embodiment of this application. The method is applicable to the architecture of the communication system shown in FIG. 1. As shown in FIG. 2, the method includes the following steps.

Step 201. A network device sends first information. Correspondingly, a terminal device receives the first information.

Optionally, in this embodiment of this application, if the terminal device is replaced with a functional module such as a chip system, the functional module may not sense a device that the received information is from; or if the network device is replaced with a functional module such as a chip system, the functional module may not sense a device to which the sent information is sent.

Optionally, if the network device is in a distributed architecture, for example, the network device includes a CU and/or a DU, or includes one or more of a CU-CP, a CU-UP, or a DU, when the network device includes a DU, that the network device sends the first information may be specifically that the DU included in the network device sends the first information. Optionally, the network device including the DU may further include a CU; or the network device including the DU may further include a CU-CP and/or a CU-UP.

For example, the first information may be downlink control information (downlink control information, DCI), or may be indication information carried in DCI. For example, a format of the DCI includes but is not limited to DCI 0_0 or DCI 0_1.

The first information may indicate a first resource and a second resource. The first resource or the second resource may be used by the terminal device to transmit uplink data. For example, the first resource may be a time-frequency resource (that may alternatively be referred to as a time-frequency domain resource), and the second resource may also be a time-frequency resource.

The first information may further indicate a first MCS corresponding to the first resource and a second MCS corresponding to the second resource. The first MCS or the second MCS may be used by the terminal device to perform corresponding modulation and coding processing on to-be-transmitted data when the terminal device transmits the uplink data.

In a possible implementation, the first resource is different from the second resource. For example, the second resource may include the first resource, and a bearable data volume of the second resource is greater than a bearable data volume of the first resource. For example, the first resource is a resource 1 (for example, a dedicated resource), the second resource may further include another resource (for example, a shared resource) in addition to the resource 1. In this way, relatively speaking, the second resource may be referred to as a larger resource, and the first resource may be referred to as a smaller resource. In this implementation, the terminal device can flexibly select a matched resource based on a data volume of to-be-transmitted data (for example, first data) to transmit the to-be-transmitted data.

In some scenarios, because a time domain resource corresponding to the first resource is the same as a time domain resource corresponding to the second resource, the first information needs to indicate only corresponding frequency domain resources (for example, a frequency domain resource corresponding to the first resource and a frequency domain resource corresponding to the second resource).

In an example, the first information is DCI. Two pieces of indication information (or indication parameters or the like) may be configured in the DCI, to respectively indicate the frequency domain resource corresponding to the first resource and the frequency domain resource corresponding to the second resource. For example, indication information 1 and indication information 2 are configured in the DCI. The indication information 1 indicates the frequency domain resource (frequency domain resource allocation (frequency domain resource allocation, FDRA)-1) corresponding to the first resource, and the indication information 2 indicates the frequency domain resource (FDRA-2) corresponding to the second resource.

In another example, the first information is still DCI. One piece of indication information (or indication parameter or the like) may be configured in the DCI, to indicate the frequency domain resource corresponding to the first resource and the frequency domain resource corresponding to the second resource. For example, indication information 1 is configured in the DCI. The indication information 1 may indicate the frequency domain resource (frequency domain resource allocation (frequency domain resource allocation, FDRA)-1) corresponding to the first resource, and may also indicate the frequency domain resource (FDRA-2) corresponding to the second resource.

In another possible implementation, the first MCS is different from the second MCS. For example, the first MCS (for example, an MCS-1) is higher than the second MCS (for example, an MCS-2). In this implementation, the terminal device can flexibly select different MCSs to transmit to-be-transmitted data.

It should be understood that, that the first MCS is higher than the second MCS may be understood as that a modulation order (modulation order) corresponding to the first MCS is higher than a modulation order corresponding to the second MCS, may be understood as that a coding rate (code rate) corresponding to the first MCS is higher than a coding rate corresponding to the second MCS, may be understood as that spectral efficiency corresponding to the first MCS is higher than spectral efficiency corresponding to the second MCS, may be understood as that a modulation order corresponding to the first MCS is higher than a modulation order corresponding to the second MCS and a coding rate corresponding to the first MCS is higher than a coding rate corresponding to the second MCS, may be understood as that a modulation order corresponding to the first MCS is higher than a modulation order corresponding to the second MCS and spectral efficiency corresponding to the first MCS is higher than spectral efficiency corresponding to the second MCS, may be understood as that a coding rate corresponding to the first MCS is higher than a coding rate corresponding to the second MCS and spectral efficiency corresponding to the first MCS is higher than spectral efficiency corresponding to the second MCS, or may be understood as that a modulation order corresponding to the first MCS is higher than a modulation order corresponding to the second MCS, a coding rate corresponding to the first MCS is higher than a coding rate corresponding to the second MCS, and spectral efficiency corresponding to the first MCS is higher than spectral efficiency corresponding to the second MCS.

Optionally, when the first MCS and the second MCS may be indicated by indexes, that the first MCS is higher than the second MCS may be understood as that an index of the first MCS is greater than an index of the second MCS. It may be understood that the foregoing several understandings in which the first MCS is higher than the second MCS are also applicable to the case in which the index of the first MCS is greater than the index of the second MCS. Details are not described herein again. For example, the first information is still DCI. Two pieces of indication information (or indication parameters or the like) may be configured in the DCI, to respectively indicate the first MCS and the second MCS. For example, indication information 3 and indication information 4 are configured in the DCI. The indication information 3 indicates to use the first MCS (for example, an MCS-1) when data is transmitted by using the first resource, or may indicate the index of the first MCS used when data is transmitted by using the first resource. The indication information 4 indicates to use the second MCS (for example, an MCS-2) when data is transmitted by using the second resource, or may indicate the index of the second MCS used when data is transmitted by using the second resource.

For example, in the following, the first information is still DCI. An implementation process of configuring, in the DCI, an indication parameter (that may alternatively be understood as a field used for indication) indicating the first MCS and the second MCS is described by using the following several possible examples.

Example 1: A first field is set (for example, a 5-bit (bit) field is set) in the DCI (for example, DCI 0_0 or DCI0_1) to indicate the first MCS (or the index of the first MCS), and a second field is set (for example, a 5-bit field is additionally set) in the DCI to indicate the second MCS (or the index of the second MCS).

Example 2: When a first field is set in the DCI to indicate the first MCS (or the index of the first MCS), a second field is set in the DCI to indicate an offset of the second MCS relative to the first MCS.

For example, when the first MCS and the second MCS may be indicated by the indexes, the second field that is set in the DCI may indicate an offset value of the index of the second MCS relative to the index of the first MCS.

Example 3: An MCS table is added, and the MCS table includes an association relationship (that may alternatively be referred to as a correspondence or a mapping relationship) between an MCS group-index (group-index), the first MCS (or the index of the first MCS), and the second MCS (or the index of the second MCS). A third field is set (for example, a 5-bit field is set) in the DCI to indicate the MCS group-index. In this way, when the MCS group-index is known by using the DCI, the first MCS and the second MCS can be known.

For example, for a content format of the MCS table, refer to the following Table 1.

**Table 1**

| MCS group-index | Index of the first MCS | Index of the second MCS |
|---|---|---|
| 0 | 27 | 25 |
| 1 | 25 | 20 |
| 2 | 20 | 15 |
| ... | ... | ... |

It should be understood that Table 1 is an example, for ease of describing the technical solutions in embodiments of this application, and does not constitute a limitation on the technical solutions in embodiments of this application.

In still another possible implementation, the first resource is different from the second resource, and the first MCS is different from the second MCS. For example, the second resource includes the first resource, and the first MCS is higher than the second MCS. A bearable data volume of the second resource is greater than a bearable data volume of the first resource. In this implementation, there can be a correspondence between a size of a scheduling resource and a level (or a size) of an MCS (for example, an MCS corresponding to a larger resource is lower than an MCS corresponding to a smaller resource), and the terminal device can flexibly select (or determine to use) a matched resource and MCS based on a data volume of to-be-transmitted data to transmit the to-be-transmitted data, thereby better balancing coding efficiency and transmission reliability.

Step 202. The terminal device determines, based on a data volume of first data, to use the first resource and the first MCS to transmit the first data, or to use the second resource and the second MCS to transmit the first data. Correspondingly, the network device receives the first data from the terminal device.

For example, the first data may be data (that may alternatively be referred to as to-be-transmitted data or uplink data) stored in an uplink data buffer (or a buffer such as a memory) of the terminal device.

In this embodiment of this application, after receiving the first information from the network device, the terminal device may know, by using the first information, the first resource and the second resource, and that the first resource corresponds to the first MCS and the second resource corresponds to the second MCS. Then, the terminal device may choose, based on the data volume of the first data, to use a matched resource to transmit uplink data (for example, transmit the first data). It should be understood that, that the terminal device chooses to use the matched resource to transmit the uplink data is correspondingly choosing to use a matched MCS to transmit the uplink data.

In an example, that the terminal device determines, based on the data volume of the first data, to use the first resource to transmit the first data is correspondingly determining to use the first MCS corresponding to the first resource to transmit the first data. In another example, that the terminal device determines, based on the data volume of the first data, to use the second resource to transmit the first data is correspondingly determining to use the second MCS corresponding to the second resource to transmit the first data.

It may be understood that the data volume herein may be a data volume of a buffer status report, a transport block size, a code block size, an information body payload, or a quantity of bits of data included in a buffer. This is not limited in this embodiment of this application.

The following describes, by using the following several possible implementations, an implementation process in which the terminal device determines, based on the data volume of the first data, to use the first resource and the first MCS to transmit the first data.

Implementation 1: When the data volume of the first data is less than a first threshold, the terminal device may determine to use the first resource and the first MCS to transmit the first data.

Implementation 2: When the data volume of the first data is less than or equal to the first threshold, the terminal device may determine to use the first resource and the first MCS to transmit the first data.

For example, the first resource is a resource 1, the first MCS is an MCS-1, the first resource is a resource 2, the second MCS is an MCS-2, and the data volume of the first data is T.

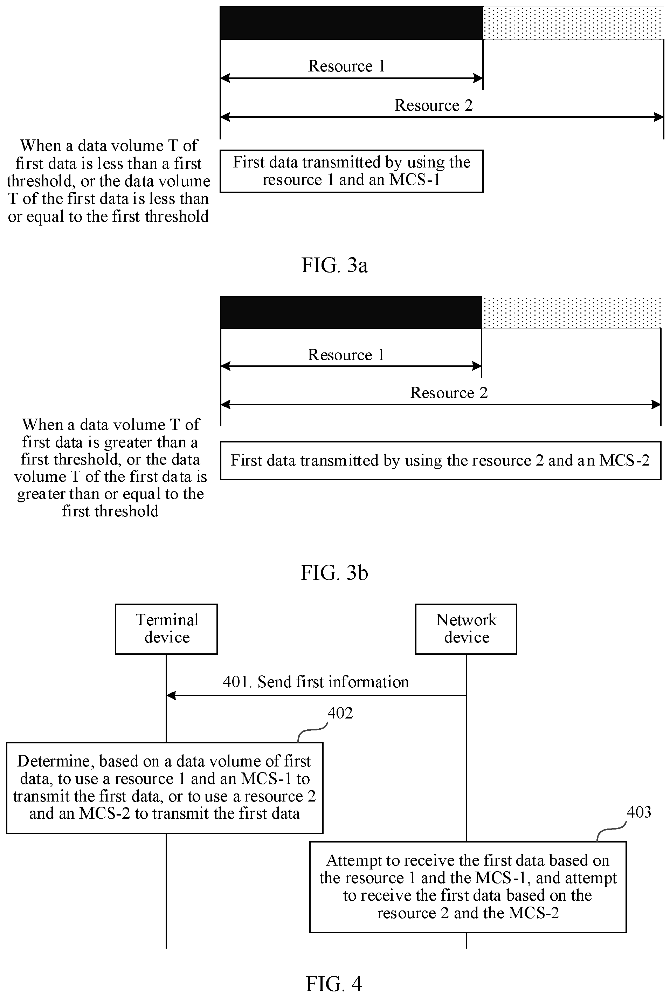

FIG. 3a is a diagram of selecting a corresponding resource and MCS based on a data volume of first data to transmit the first data according to an embodiment of this application. As shown in FIG. 3a, when the data volume T of the first data is less than the first threshold, or the data volume T of the first data is less than or equal to the first threshold, the terminal device determines that the first data can be borne by the resource 1. Therefore, the terminal device may determine to use the resource 1 and the MCS-1 corresponding to the resource 1 to transmit the first data.

The following describes several possible determining manners of the first threshold.

Manner 1: The first threshold may be predefined, for example, predefined by using a protocol.

Manner 2: The first threshold may be configured by the network device, or may be configured by the terminal device and the network device through negotiation in advance.

Manner 3: The terminal device determines the bearable data volume of the first resource based on the first resource (for example, the resource 1) and the first MCS (for example, the MCS-1). Then, the terminal device may determine the first threshold based on the bearable data volume of the first resource.

For example, the bearable data volume of the first resource may satisfy the following formula (1): ${N}_{info} = {N}_{RE} \times {Q}_{m} \times v \times R$

*N_{info}* represents the bearable data volume of the first resource, for example, may represent a quantity of information bits that the first resource can bear. *N_{RE}* represents a total quantity of resource elements (RE) calculated based on the first resource. *Qₘ* represents a modulation order that corresponds to the first MCS and that is queried based on an MCS index value table. *R* represents a code rate that corresponds to the first MCS and that is queried based on the MCS index value table. *v* represents each user stream number (that may alternatively be understood as a rank (rank) number). For example, *v* may be configured by the network device.

For example, the following describes, by using the following several possible examples, an implementation process in which the terminal device determines the first threshold based on the bearable data volume of the first resource.

Example 1: The terminal device may use the bearable data volume of the first resource as the first threshold.

For example, the bearable data volume of the first resource is B. The terminal device may use the bearable data volume B of the first resource as the first threshold.

Example 2: The terminal device may use a product result of the bearable data volume of the first resource and a first coefficient (or a first factor) as the first threshold.

For example, the first coefficient (or the first factor) may be predefined by the terminal device, may be configured by the network device, may be configured by the terminal device and the network device through negotiation in advance, or may be dynamically configured by the terminal device based on an actual status.

For example, the bearable data volume of the first resource is still B, and it is assumed that the first coefficient is α. The terminal device may multiply the bearable data volume B of the first resource by the first coefficient α, to obtain B*α. Then, the terminal device may use B*α as the first threshold.

The following describes, by using the following several possible implementations, an implementation process in which the terminal device determines, based on the data volume of the first data, to use the second resource and the second MCS to transmit uplink data.

Implementation 1: When the data volume of the first data is greater than the first threshold, the terminal device may determine to use the second resource and the second MCS to transmit the first data.

Implementation 2: When the data volume of the first data is greater than or equal to the first threshold, the terminal device may determine to use the second resource and the second MCS to transmit the first data.

For example, the first resource is still a resource 1, the first MCS is still an MCS-1, the first resource is still a resource 2, the second MCS is still an MCS-2, and the data volume of the first data is still T. FIG. 3b is another diagram of selecting a corresponding resource and MCS based on a data volume of first data to transmit the first data according to an embodiment of this application. As shown in FIG. 3b, when the data volume T of the first data is greater than the first threshold, or the data volume T of the first data is greater than or equal to the first threshold, the terminal device determines that the first data cannot be borne by the resource 1. Therefore, the terminal device may determine to use the resource 2 and the MCS-2 corresponding to the resource 2 to transmit the first data.

Optionally, in an example, after determining a resource and/or an MCS that are/is used to transmit the first data, the terminal device may send second information to the network device to notify usage of the resource (that may alternatively be understood as a use status of the resource) and/or usage of the MCS (that may alternatively be understood as a use status of the MCS) for transmitting the first data, that is, indicate, by using the second information, a resource and/or an MCS that take/takes effect for transmitting the first data. In another example, after determining a resource and/or an MCS that are/is used to transmit the first data, the terminal device does not send the second information to the network device to notify usage of the resource and/or usage of the MCS for transmitting the first data. For example, the second information may be uplink control information (uplink control information, UCI), or may be indication information carried in UCI. In this embodiment of this application, the second information may also be transmitted on the first resource.

For example, the second information may indicate one or more of the following: use statuses of the first resource and the second resource, and use statuses of the first MCS and the second MCS. For example, the use statuses of the first resource and the second resource may indicate a used resource in the first resource or the second resource. For example, if the first resource is used, the second resource is not used; or if the second resource is used, the first resource is not used. The use statuses of the first MCS and the second MCS may indicate a used MCS in the first MCS or the second MCS. For example, if the first MCS is used, the second MCS is not used; or if the second MCS is used, the first MCS is not used. For example, when it is determined to use the first resource and the first MCS to transmit the first data, the second information indicates that the first resource is used and/or indicates that the first MCS is used. It may be understood that when the second information indicates that the first resource is used, the network device is notified that an MCS used to transmit the first data is the first MCS; or when the second information indicates that the first MCS is used, the network device is notified that a resource used to transmit the first data is the first resource.

For another example, when it is determined to use the second resource and the second MCS to transmit the first data, the second information indicates that the second resource is used and/or indicates that the second MCS is used. It may be understood that when the second information indicates that the second resource is used, the network device is notified that an MCS used to transmit the first data is the second MCS; or when the second information indicates that the second MCS is used, the network device is notified that a resource used to transmit the first data is the second resource.

In this embodiment of this application, the terminal device may determine, based on a code rate corresponding to a reference MCS and a scale factor corresponding to the reference MCS, a first code rate corresponding to the second information. Then, the terminal device may send the second information to the network device based on the first code rate. Then, after receiving encoded second information from the terminal device, the network device may decode the encoded second information. After correctly decoding the encoded second information, the network device may obtain the second information, that is, may obtain the resource and/or the MCS that are/is used to transmit the first data. In this way, the network device may receive the first data based on the resource used to transmit the first data, and further decode the first data based on the MCS corresponding to the resource. For example, the network device may receive the first data on the resource used to transmit the first data, and may decode (that may alternatively be referred to as demodulate and decode) the first data by using the MCS used to transmit the first data. The reference MCS is the first MCS or the second MCS. The scale factor may represent a quantity of resource elements required for the second information. For example, a larger scale factor indicates that more REs are required for the second information (for example, UCI), and transmission efficiency of the second information can be better ensured.

For example, a scale factor corresponding to the first MCS is β_{offset}, a scale factor corresponding to the second MCS is βoffset', a code rate corresponding to the first MCS is a1, and a code rate corresponding to the second MCS is a2. The terminal device may determine, based on a code rate corresponding to either of the first MCS or the second MCS and a scale factor corresponding to the MCS, the first code rate corresponding to the second information. For example, for the first MCS, the terminal device uses, as the first code rate corresponding to the second information, a product result a1*β_{offset} of the code rate a1 corresponding to the first MCS and the scale factor β_{offset} corresponding to the first MCS. Then, the terminal device may send the second information to the network device based on the first code rate a1*β_{offset}. For another example, for the second MCS, the terminal device uses, as the first code rate corresponding to the second information, a product result a2*β_{offset}' of the code rate a2 corresponding to the second MCS and the scale factor β_{offset}' corresponding to the second MCS. Then, the terminal device may send the second information to the network device based on the first code rate a2*β_{offset}'.

The following describes, by using the following several possible implementations, an implementation process in which the network device receives the first data.

Manner 1: When the terminal device does not send the second information to the network device, the network device receives the first data in a blind detection manner, that is, the network device separately attempts to receive the first data based on the first resource and the first MCS, and the second resource and the second MCS.

For example, the first resource is a resource 1, the first MCS is an MCS-1, the first resource is a resource 2, and the second MCS is an MCS-2. The network device attempts to receive the first data based on the resource 1 and the MCS-1, and attempts to receive the first data based on the resource 2 and the MCS-2.

Manner 2: When the terminal device sends the second information to the network device, the network device may know, by using the second information, the resource and/or the MCS that are/is used by the terminal device to transmit the first data. Then, the network device may receive the first data on the resource selected by the terminal device for use, and may decode the first data by using the MCS corresponding to the resource. In the manner 2, blind detection of the network device can be avoided, overheads caused by blind detection of the network device can be saved, and energy consumption of the network device can be reduced. In addition, the second information is sent, so that the network device can effectively receive the first data in a timely manner, and the first data can be more pertinently received on a specific resource.

For example, the second information indicates that the second resource is used. After correctly decoding the second information from the terminal device, the network device may obtain the second information, that is, may know that the resource used by the terminal device to transmit the first data is the second resource. Then, the network device may receive the first data on the second resource, and may decode the first data by using the second MCS corresponding to the second resource.

It can be learned from step 201 and step 202 that, the first information indicates a plurality of scheduling resources (for example, the first resource and the second resource), and indicates MCSs (for example, the first MCS and the second MCS) respectively corresponding to the plurality of scheduling resources, so that the terminal device can flexibly (or dynamically) select (or determine to use) a matched resource and MCS based on the data volume of the first data to transmit the first data. In this way, coding efficiency and transmission reliability can be better balanced, thereby improving coding efficiency and transmission reliability, and flexible MCS configuration can be implemented.

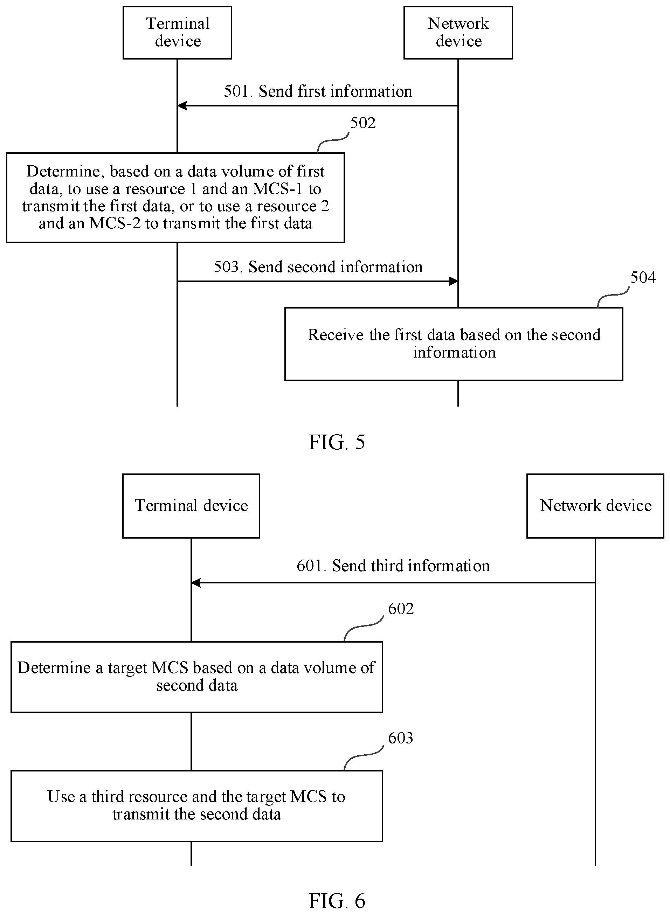

Based on the technical solutions of the foregoing communication method shown in FIG. 2, the following describes, in detail by using specific examples shown in FIG. 4 and FIG. 5, the foregoing communication method shown in FIG. 2. In the specific examples shown in FIG. 4 and FIG. 5, the first resource is a resource 1, the first MCS is an MCS-1, the second resource is a resource 2, and the second MCS is an MCS-2.

FIG. 4 is a schematic flowchart of another communication method according to an embodiment of this application. As shown in FIG. 4, a specific procedure of the method may include the following steps:
Step 401. A network device sends first information to a terminal device. Correspondingly, the terminal device receives the first information from the network device.

Optionally, for related descriptions of the first information in step 401, refer to the related descriptions of the first information in step 201. Details are not described herein again.

Step 402. The terminal device determines, based on a data volume of first data, to use a resource 1 and an MCS-1 to transmit the first data, or to use a resource 2 and an MCS-2 to transmit the first data.

Optionally, for an implementation of transmitting the first data in step 402, refer to the implementation of transmitting the first data in step 202. Details are not described herein again.

Step 403. The network device attempts to receive the first data based on the resource 1 and the MCS-1, and attempts to receive the first data based on the resource 2 and the MCS-2.

Optionally, for an implementation of step 403, refer to the manner 1 in which the network device receives the first data in step 202. Details are not described herein again.

It can be learned from step 401 to step 403 that, the first information indicates a plurality of scheduling resources (for example, the resource 1 and the resource 2), and indicates MCSs (for example, the MCS-1 and the MCS-2) respectively corresponding to the plurality of scheduling resources, so that the terminal device can flexibly select a matched resource and MCS based on the data volume of the first data to transmit the first data. In this way, coding efficiency and transmission reliability can be better balanced, thereby improving coding efficiency and transmission reliability, and flexible MCS configuration can be implemented.

FIG. 5 is a schematic flowchart of still another communication method according to an embodiment of this application. A difference between the communication method shown in FIG. 5 and the communication method shown in FIG. 4 lies in that the terminal device sends second information to the network device in the communication method shown in FIG. 5. As shown in FIG. 5, a specific procedure of the method may include the following steps:

Step 501. A network device sends first information to a terminal device. Correspondingly, the terminal device receives the first information from the network device.

Optionally, for related descriptions of the first information in step 501, refer to the related descriptions of the first information in step 201. Details are not described herein again.

Step 502. The terminal device determines, based on a data volume of first data, to use a resource 1 and an MCS-1 to transmit the first data, or to use a resource 2 and an MCS-2 to transmit the first data.

Optionally, for an implementation of transmitting the first data in step 502, refer to the implementation of transmitting the first data in step 202. Details are not described herein again.

Step 503. The terminal device sends second information to the network device. Correspondingly, the terminal device receives the second information from the network device.

Optionally, for related descriptions of the second information in step 503, refer to the related descriptions of the second information in step 202. Details are not described herein again.

It should be understood that step 503 may be performed before the terminal device transmits the first data or after the terminal device determines a to-be-used resource, or may be performed when the terminal device transmits the first data. Alternatively, the terminal device transmits the second information to the network device together with the first data. This is not limited in this embodiment of this application.

Step 504. The network device receives the first data based on the second information.

Optionally, for an implementation of step 504, refer to the manner 2 in which the network device receives the first data in step 202. Details are not described herein again.

It can be learned from step 501 to step 504 that, the first information indicates a plurality of scheduling resources (for example, the resource 1 and the resource 2), and indicates MCSs (for example, the MCS-1 and the MCS-2) respectively corresponding to the plurality of scheduling resources, so that the terminal device can flexibly select a matched resource and MCS based on the data volume of the first data to transmit the first data. In this way, coding efficiency and transmission reliability can be better balanced, thereby improving coding efficiency and transmission reliability, and flexible MCS configuration can be implemented. In addition, the terminal device sends, to the network device, the second information indicating a use status of a resource and/or a use status of an MCS for transmitting the first data, so that the network device can know, in a timely manner, the resource and/or the MCS that are/is used by the terminal device to transmit the first data. Therefore, the network device can effectively receive, in a timely manner, the first data based on the resource and the MCS that are used to transmit the first data. In this way, in the method, the network device can unnecessarily perform blind detection, to help reduce energy consumption overheads caused by blind detection of the network device, thereby effectively avoiding a problem that a specific energy consumption loss (for example, signaling overheads, a power loss, or communication resource consumption) is caused for the network device by blind detection of the network device.

FIG. 6 is an example of a schematic flowchart of still another communication method according to an embodiment of this application. The method is applicable to the architecture of the communication system shown in FIG. 1. As shown in FIG. 6, the method includes the following steps.

Step 601. A network device sends third information. Correspondingly, a terminal device receives the third information from the network device.

Optionally, in this embodiment of this application, if the terminal device is replaced with a functional module such as a chip system, the functional module may not sense a device that the received information is from; or if the network device is replaced with a functional module such as a chip system, the functional module may not sense a device to which the sent information is sent.

Optionally, if the network device is in a distributed architecture, for example, the network device includes a CU and/or a DU, or includes one or more of a CU-CP, a CU-UP, or a DU, when the network device includes a DU, that the network device sends the third information may be specifically that the DU included in the network device sends the third information. Optionally, the network device including the DU may further include a CU; or the network device including the DU may further include a CU-CP and/or a CU-UP.

For example, the third information may be DCI.

The third information may indicate a third resource. The third resource is associated with at least two MCSs. For example, there is a correspondence (or a mapping relationship) between the third resource and the at least two MCSs. The third resource may be used by the terminal device to transmit uplink data. For example, the third resource may be a time-frequency resource. For example, the third resource may be a first resource (for example, a resource 1), a second resource (for example, a resource 2), or another resource (for example, a resource 3).

Optionally, the third information may further indicate the at least two MCSs corresponding to the third resource. The at least two MCSs may be used by the terminal device to perform corresponding modulation and coding processing on to-be-transmitted data when the terminal device transmits the uplink data.

Optionally, the at least two MCSs may be different. For example, the at least two MCSs include a third MCS and a fourth MCS. The third MCS is higher than the fourth MCS. In this implementation, the terminal device can flexibly select different MCSs based on a data volume of to-be-transmitted data to transmit the to-be-transmitted data.

It should be understood that, that the third MCS is higher than the fourth MCS may be understood as that a modulation order corresponding to the third MCS is higher than a modulation order corresponding to the fourth MCS, may be understood as that a coding rate corresponding to the third MCS is higher than a coding rate corresponding to the fourth MCS, may be understood as that spectral efficiency corresponding to the third MCS is higher than spectral efficiency corresponding to the fourth MCS, may be understood as that a modulation order corresponding to the third MCS is higher than a modulation order corresponding to the fourth MCS and a coding rate corresponding to the third MCS is higher than a coding rate corresponding to the fourth MCS, may be understood as that a modulation order corresponding to the third MCS is higher than a modulation order corresponding to the fourth MCS and spectral efficiency corresponding to the third MCS is higher than spectral efficiency corresponding to the fourth MCS, may be understood as that a coding rate corresponding to the third MCS is higher than a coding rate corresponding to the fourth MCS and spectral efficiency corresponding to the third MCS is higher than spectral efficiency corresponding to the fourth MCS, or may be understood as that a modulation order corresponding to the third MCS is higher than a modulation order corresponding to the fourth MCS, a coding rate corresponding to the third MCS is higher than a coding rate corresponding to the fourth MCS, and spectral efficiency corresponding to the third MCS is higher than spectral efficiency corresponding to the fourth MCS.

For example, when the third MCS and the fourth MCS may be indicated by indexes, that the third MCS is higher than the fourth MCS may be understood as that an index of the third MCS is greater than an index of the fourth MCS. It may be understood that the foregoing several understandings in which the third MCS is higher than the fourth MCS are also applicable to the case in which the index of the third MCS is greater than the index of the fourth MCS. Details are not described herein again. For example, the third information is still DCI. Two pieces of indication information (or indication parameters or the like) may be configured in the DCI, to respectively indicate the third MCS and the fourth MCS. For example, indication information a and indication information b are configured in the DCI. The indication information a indicates to use the third MCS (for example, an MCS-3) when data is transmitted by using the third resource, or may indicate the index of the third MCS used when data is transmitted by using the third resource. The indication information b indicates to use the second MCS (for example, an MCS-4) when data is transmitted by using the third resource, or may indicate the index of the fourth MCS used when data is transmitted by using the third resource.

Optionally, for an implementation of configuring, in the DCI, the indication parameters indicating the third MCS and the fourth MCS in step 601, refer to the implementation of configuring, in the DCI, the indication parameters indicating the first MCS and the second MCS in step 201. Details are not described herein again.

Step 602. The terminal device determines a target MCS based on a data volume of second data.

The target MCS is one of the at least two MCSs.

For example, the second data may be data stored in an uplink data buffer (or a buffer such as a memory) of the terminal device.

In this embodiment of this application, after receiving the third information from the network device, the terminal device may know, by using the third information, the third resource and the at least two MCSs corresponding to the third resource. Then, the terminal device may choose, from the at least two MCSs based on the data volume of the second data, to use a matched MCS to transmit uplink data (for example, transmit the second data).

For example, the following uses an example in which the at least two MCSs include a third MCS and a fourth MCS, and the third MCS is higher than the fourth MCS, to describe, by using the following several possible implementations, an implementation process in which the terminal device determines the target MCS based on the data volume of the second data.

Implementation 1: When the data volume of the second data is less than a second threshold, the terminal device determines that the target MCS is the fourth MCS.

Implementation 2: When the data volume of the second data is less than or equal to the second threshold, the terminal device determines that the target MCS is the fourth MCS.

Implementation 3: When the data volume of the second data is greater than the second threshold, the terminal device determines that the target MCS is the third MCS.

Implementation 4: When the data volume of the second data is greater than or equal to the second threshold, the terminal device determines that the target MCS is the third MCS.

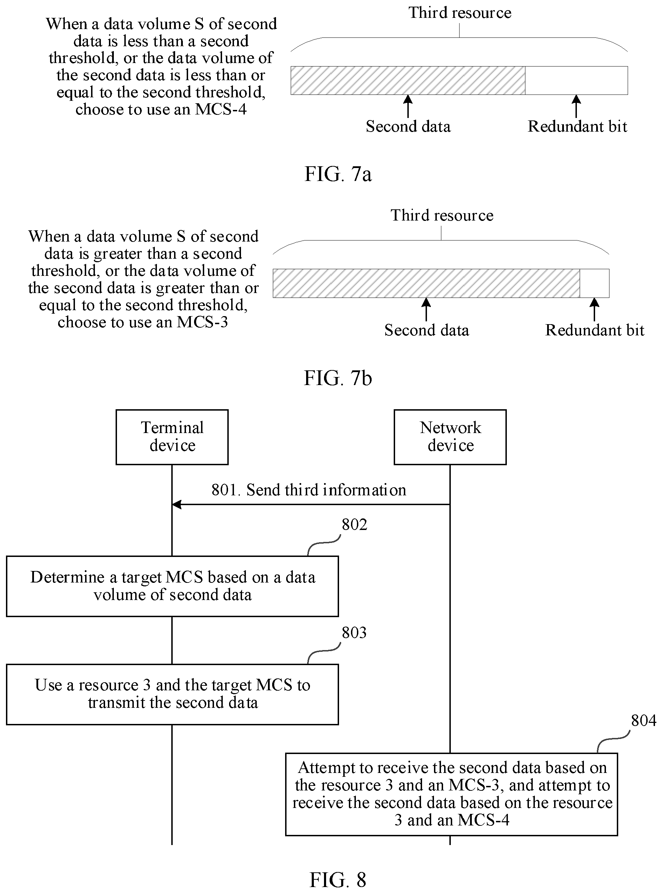

For example, the third MCS is an MCS-3, the fourth MCS is an MCS-4, and the data volume of the second data is S. FIG. 7a and FIG. 7b each are a diagram of selecting a corresponding MCS based on a data volume of second data to transmit the second data according to an embodiment of this application. As shown in FIG. 7a, when the data volume S of the second data is less than the second threshold, or the data volume S of the second data is less than or equal to the second threshold, to add more redundant bits to the third resource to improve transmission reliability, in this case, the terminal device may choose to use the MCS-4 to transmit the second data. As shown in FIG. 7b, when the data volume S of the second data is greater than the second threshold, or the data volume S of the second data is greater than or equal to the second threshold, to add fewer redundant bits to the third resource to improve transmission efficiency, in this case, the terminal device may choose to use the MCS-3 to transmit the second data.

The following describes several possible determining manners of the second threshold.

Manner 1: The second threshold may be predefined, for example, predefined by using a protocol.

Manner 2: The second threshold may be configured by the network device, or may be configured by the terminal device and the network device through negotiation in advance.

Manner 3: The terminal device determines a bearable data volume of the third resource based on the third resource (for example, the resource 1) and either of the third MCS (for example, the MCS-3) or the fourth MCS. Then, the terminal device may determine the second threshold based on the bearable data volume of the third resource.

Optionally, for the bearable data volume of the third resource, refer to the descriptions of the bearable data volume of the first resource in step 202. The bearable data volume of the third resource satisfies the foregoing formula (1). Details are not described herein again.

For example, the following describes, by using the following several possible examples, an implementation process in which the terminal device determines the second threshold based on the bearable data volume of the third resource.

Example 1: The terminal device may use the bearable data volume of the third resource as the second threshold.

For example, the bearable data volume of the third resource is P. The terminal device may use the bearable data volume P of the first resource as the first threshold.

Example 2: The terminal device may use a product result of the bearable data volume of the third resource and a second coefficient (or a second factor) as the second threshold.

For example, the second coefficient (or the second factor) may be predefined by the terminal device, may be configured by the network device, may be configured by the terminal device and the network device through negotiation in advance, or may be dynamically configured by the terminal device based on an actual status.

For example, the bearable data volume of the third resource is still P, and it is assumed that the second coefficient is γ. The terminal device may multiply the bearable data volume P of the third resource by the second coefficient γ, to obtain P*γ. Then, the terminal device may use P*γ as the second threshold.

Optionally, in an example, after determining an MCS used to transmit the second data, the terminal device may send fourth information to the network device to notify usage of the MCS (that may alternatively be understood as a use status of the MCS) for transmitting the second data. In another example, after determining an MCS used to transmit the second data, the terminal device does not send the fourth information to the network device to notify usage of the MCS for transmitting the second data. For example, the fourth information may be uplink control information (uplink control information, UCI), or may be indication information carried in UCI. In this embodiment of this application, the fourth information may also be transmitted on the third resource.

For example, the fourth information may indicate use statuses of the at least two MCSs. For example, the at least two MCSs include a third MCS and a fourth MCS. When it is determined to use the third resource and the third MCS to transmit the second data, the fourth information indicates that the third MCS is used. When it is determined to use the third resource and the fourth MCS to transmit the second data, the fourth information indicates that the fourth MCS is used.

In this embodiment of this application, the terminal device may determine, based on a code rate corresponding to a reference MCS and a scale factor corresponding to the reference MCS, a second code rate corresponding to the fourth information. Then, the terminal device may send the fourth information to the network device based on the second code rate. Then, after receiving encoded fourth information from the terminal device, the network device may decode the encoded fourth information. After correctly decoding the encoded fourth information, the network device may obtain the fourth information, that is, may obtain the MCS used to transmit the first data. In this way, the network device may receive the first data on the third resource, and further decode (that may alternatively be referred to as demodulate and decode) the first data based on the MCS used to transmit the first data. The scale factor may represent a quantity of resource elements required for the fourth information. The reference MCS is one of the at least two MCSs. For example, the at least two MCSs include a third MCS and a fourth MCS, and the reference MCS may be either of the third MCS or the fourth MCS.

For example, the at least two MCSs still include a third MCS and a fourth MCS, and it is assumed that a scale factor corresponding to the third MCS is β_{offset}'', a scale factor corresponding to the fourth MCS is β_{offset}‴, a code rate corresponding to the third MCS is b1, and a code rate corresponding to the fourth MCS is b2. For example, for the third MCS, the terminal device uses, as the second code rate corresponding to the fourth information, a product result b1*β_{offset}'' of the code rate b1 corresponding to the third MCS and the scale factor β_{offset}'' corresponding to the third MCS. Then, the terminal device may send the fourth information to the network device based on the second code rate b1*β_{offset}''. For another example, for the fourth MCS, the terminal device uses, as the second code rate corresponding to the fourth information, a product result b2*β_{offset}‴ of the code rate b2 corresponding to the fourth MCS and the scale factor β_{offset}‴ corresponding to the fourth MCS. Then, the terminal device may send the fourth information to the network device based on the second code rate b2*β_{offset}‴.

Step 603. The terminal device uses the third resource and the target MCS to transmit the second data. Correspondingly, the network device receives the second data from the terminal device.

In this embodiment of this application, after determining the target MCS, the terminal device may use the third resource and the target MCS to transmit the second data. Optionally, the terminal device may send the fourth information to the network device, or may not send the fourth information to the network device.

The following describes, by using the following several possible implementations, an implementation process in which the network device receives the second data.

Manner 1: When the terminal device does not send the fourth information to the network device, the network device receives the second data in a blind detection manner, that is, the network device separately attempts to receive the second data on the third resource based on the at least two MCSs.

For example, the at least two MCSs still include a third MCS and a fourth MCS. The network device attempts to receive the second data based on the third resource and the third MCS, and attempts to receive the second data based on the third resource and the fourth MCS.

Manner 2: When the terminal device sends the fourth information to the network device, the network device may know, by using the fourth information, the MCS used by the terminal device to transmit the second data. Then, the network device may receive the second data on the third resource, and may decode the second data by using the MCS that the terminal device chooses to use. In the manner 2, blind detection of the network device can be avoided, overheads caused by blind detection of the network device can be saved, and energy consumption of the network device can be reduced. In addition, the fourth information is sent, so that the network device can effectively receive the second data in a timely manner, and a specific MCS can be more pertinently used to decode the second data.

For example, the fourth information indicates that the third MCS is used. After correctly decoding the fourth information from the terminal device, the network device may obtain the fourth information, that is, may know that the MCS used by the terminal device to transmit the second data is the third MCS. Then, the network device may receive the second data on the third resource, and may decode the second data by using the third MCS.

It can be learned from step 601 to step 603 that, the third information indicates one scheduling resource (for example, the third resource), and indicates that the scheduling resource corresponds to at least two MCSs (for example, the third MCS and the fourth MCS), so that the terminal device can flexibly (or dynamically) select a matched MCS based on the data volume of the second data to transmit the second data. In this way, coding efficiency and transmission reliability can be improved, and flexible MCS configuration can be implemented.

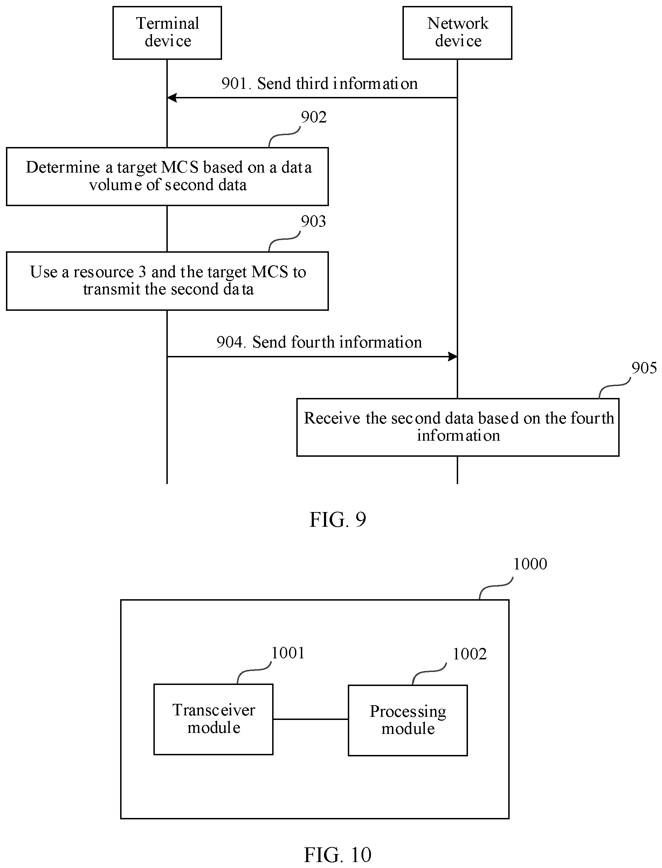

Based on the technical solutions of the foregoing communication method shown in FIG. 6, the following describes, in detail by using specific examples shown in FIG. 8 and FIG. 9, the foregoing communication method shown in FIG. 6. In the specific examples shown in FIG. 8 and FIG. 9, the third resource is a resource 3, the at least two MCSs include a third MCS and a fourth MCS, the third MCS is an MCS-3, and the fourth MCS is an MCS-4.

FIG. 8 is a schematic flowchart of still another communication method according to an embodiment of this application. As shown in FIG. 8, a specific procedure of the method may include the following steps:
Step 801. A network device sends third information to a terminal device. Correspondingly, the terminal device receives the third information from the network device.

Optionally, for related descriptions of the third information in step 801, refer to the related descriptions of the third information in step 601. Details are not described herein again.

Step 802. The terminal device determines a target MCS based on a data volume of second data.

Optionally, for an implementation of step 802, refer to the related implementation of step 602. Details are not described herein again.

Step 803. The terminal device uses a resource 3 and the target MCS to transmit the second data.

Optionally, for an implementation of transmitting the second data in step 803, refer to the implementation of transmitting the second data in step 603. Details are not described herein again.

Step 804. The network device attempts to receive the second data based on the resource 3 and an MCS-3, and attempts to receive the second data based on the resource 3 and an MCS-4.

Optionally, for an implementation of step 804, refer to the manner 1 in which the network device receives the second data in step 603. Details are not described herein again.

It can be learned from step 801 to step 804 that, the third information indicates one scheduling resource (for example, the resource 3), and indicates that the scheduling resource corresponds to at least two MCSs (for example, a third MCS and a fourth MCS), so that the terminal device can flexibly select a matched MCS based on the data volume of the second data to transmit the second data. In this way, coding efficiency and transmission reliability can be improved, and flexible MCS configuration can be implemented.

FIG. 9 is a schematic flowchart of still another communication method according to an embodiment of this application. A difference between the communication method shown in FIG. 9 and the communication method shown in FIG. 8 lies in that the terminal device sends fourth information to the network device in the communication method shown in FIG. 9. As shown in FIG. 9, a specific procedure of the method may include the following steps:

Step 901. A network device sends third information to a terminal device. Correspondingly, the terminal device receives the third information from the network device.

Optionally, for related descriptions of the third information in step 901, refer to the related descriptions of the third information in step 601. Details are not described herein again.

Step 902. The terminal device determines a target MCS based on a data volume of second data.

Optionally, for an implementation of step 902, refer to the related implementation of step 602. Details are not described herein again.

Step 903. The terminal device uses a resource 3 and the target MCS to transmit the second data.

Optionally, for an implementation of transmitting the second data in step 903, refer to the implementation of transmitting the second data in step 603. Details are not described herein again.

Step 904. The terminal device sends fourth information to the network device. Correspondingly, the terminal device receives the fourth information from the network device.

Optionally, for related descriptions of the fourth information in step 904, refer to the related descriptions of the fourth information in step 602. Details are not described herein again.

It should be understood that there is no sequence for performing step 903 and step 904. For example, step 904 may be performed before step 903, or step 904 may be performed after step 903. This is not limited in this embodiment of this application.

Step 905. The network device receives the second data based on the fourth information.

Optionally, for an implementation of step 905, refer to the manner 2 in which the network device receives the second data in step 603. Details are not described herein again.

It can be learned from step 901 to step 905 that, the third information indicates one scheduling resource (for example, the resource 3), and indicates that the scheduling resource corresponds to at least two MCSs (for example, a third MCS and a fourth MCS), so that the terminal device can flexibly select a matched MCS based on the data volume of the second data to transmit the second data. In this way, coding efficiency and transmission reliability can be improved, and flexible MCS configuration can be implemented. In addition, the terminal device sends, to the network device, the fourth information indicating a use status of an MCS for transmitting the second data, so that the network device can know, in a timely manner, the MCS used by the terminal device to transmit the second data. Therefore, the network device can effectively receive the second data in a timely manner based on the third resource and the MCS used to transmit the second data. In this way, in the method, the network device can unnecessarily perform blind detection, to help reduce energy consumption overheads caused by blind detection of the network device, thereby effectively avoiding a problem that a specific energy consumption loss (for example, signaling overheads, a power loss, or communication resource consumption) is caused for the network device by blind detection of the network device.

It should be noted that in descriptions of this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. The expression "at least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit a sequence, a time sequence, priorities, or importance degrees of the plurality of objects. In addition, the terms "include", "comprise", "have", and variations thereof that appear in this application all mean "including but not limited to", unless otherwise specifically emphasized in another manner.

In addition, it should be noted that each step in the foregoing embodiments may be performed by a corresponding device, or may be performed by a component such as a chip, a processor, or a chip system in the device. This is not limited in embodiments of this application. The foregoing embodiments are described only by using an example in which each step is performed by the corresponding device.

It should be noted that in the foregoing embodiments, some steps may be selected for implementation, or a sequence of steps in the figure may be adjusted for implementation. This is not limited in this application. It should be understood that performing some steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented in a form of hardware or a combination of hardware and computer software. Whether a function is performed by hardware or hardware driven by computer software depends on particular application scenarios and design constraint conditions of the technical solutions.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step division, performed on this basis without affecting implementation of the overall solutions also falls within the scope disclosed in this application.

Based on a same concept, an embodiment of this application further provides a communication apparatus. The communication apparatus can be used in the architecture of the communication system shown in FIG. 1. Optionally, the communication apparatus may be a communication device (for example, a first communication apparatus or a second communication apparatus) or a module (for example, a processor, a processing unit, a chip, a chip system, or a circuit) required for supporting the communication device in implementing the communication method. For example, the first communication apparatus may be a terminal device or a module (for example, a processor, a processing unit, a chip, a chip system, or a circuit) of the terminal device, or may be a logical node, a logical module, or software that can implement all or some functions of the terminal. The second communication apparatus may be a network device or a module (for example, a processor, a processing unit, a chip, a chip system, or a circuit) of the network device, or may be a logical node, a logical module, or software that can implement all or some functions of the network device. In an example, when the communication apparatus is a first communication apparatus (for example, a terminal device), the communication apparatus is configured to implement the technical solutions related to the first communication apparatus in the foregoing embodiments, or a module (for example, a chip) of the communication apparatus is configured to implement the technical solutions related to the first communication apparatus in the foregoing embodiments. Therefore, beneficial effects of the first communication apparatus in the foregoing embodiments can also be implemented. For example, the terminal device may be the terminal device 120 (for example, the terminal device 120a) shown in FIG. 1. For example, the communication apparatus is a chip disposed in the first communication apparatus. When the communication apparatus is the chip, the communication apparatus includes a communication interface and a processor, and does not include a memory. The communication interface exists as an input/output interface, and the input/output interface is used by the chip to implement receiving/sending of the first communication apparatus. The input/output interface may include an input interface and/or an output interface. The input interface may implement receiving of the first communication apparatus, and the output interface may be configured to implement sending of the first communication apparatus. The processor is configured to read and execute a corresponding computer program or instructions, so that corresponding functions of the first communication apparatus are implemented. Optionally, when the chip implements the corresponding functions of the first communication apparatus in the foregoing embodiments, the input/output interface may implement a receiving/sending operation performed by the first communication apparatus in the foregoing embodiments, and the processor may implement an operation, other than the receiving/sending operation, performed by the first communication apparatus in the foregoing embodiments. For specific related descriptions, refer to the related descriptions of the first communication apparatus in the method embodiments shown in FIG. 2, FIG. 4, FIG. 5, FIG. 6, FIG. 8, and FIG. 9. Details are not described herein again.

In another example, when the communication apparatus is a second communication apparatus (for example, a network device), the communication apparatus is configured to implement the technical solutions related to the second communication apparatus in the foregoing embodiments, or a module (for example, a chip) of the communication apparatus is configured to implement the technical solutions related to the second communication apparatus in the foregoing embodiments. Therefore, beneficial effects of the second communication apparatus in the foregoing embodiments can also be implemented. For example, the network device may be the RAN node 110 (for example, the RAN node 110a) shown in FIG. 1. For example, the communication apparatus is a chip disposed in the second communication apparatus. When the communication apparatus is the chip, the communication apparatus includes a communication interface and a processor, and does not include a memory. The communication interface exists as an input/output interface, and the input/output interface is used by the chip to implement receiving/sending of the second communication apparatus. The input/output interface may include an input interface and/or an output interface. The input interface may implement receiving of the second communication apparatus, and the output interface may be configured to implement sending of the second communication apparatus. The processor is configured to read and execute a corresponding computer program or instructions, so that corresponding functions of the second communication apparatus are implemented. Optionally, when the chip implements the corresponding functions of the second communication apparatus in the foregoing embodiments, the input/output interface may implement a receiving/sending operation performed by the second communication apparatus in the foregoing embodiments, and the processor may implement an operation, other than the receiving/sending operation, performed by the second communication apparatus in the foregoing embodiments. For specific related descriptions, refer to the related descriptions of the second communication apparatus in the method embodiments shown in FIG. 2, FIG. 4, FIG. 5, FIG. 6, FIG. 8, and FIG. 9. Details are not described herein again.

Referring to FIG. 10, a communication apparatus 1000 includes a transceiver module 1001 (that may alternatively be referred to as a communication module, a transceiver unit, or a communication unit, configured to send and receive data) and a processing module 1002 (that may alternatively be referred to as a processing unit). The communication apparatus 1000 is configured to implement the functions of the first communication apparatus (for example, a terminal device) or the second communication apparatus (for example, a network device) in the method embodiments shown in FIG. 2, FIG. 4, FIG. 5, FIG. 6, FIG. 8, and FIG. 9.

Optionally, the transceiver module 1001 may include a receiving module and/or a sending module. The receiving module may be used by the communication apparatus 1000 to receive a signal (information, data, or the like), and the sending module may be used by the communication apparatus 1000 to send a signal (information, data, or the like). The sending module may send a signal (information, data, or the like) under control of the processing module 1002, and the receiving module may receive a signal (information, data, or the like) under control of the processing module 1002.

When the communication apparatus 1000 is configured to implement the functions of the first communication apparatus (for example, a terminal device) in the method embodiments shown in FIG. 2, FIG. 4, and FIG. 5: the transceiver module 1001 is configured to receive first information. The first information may indicate a first resource and a second resource, and the first information may further indicate a first MCS corresponding to the first resource and a second MCS corresponding to the second resource. The processing module 1002 is configured to determine, based on a data volume of first data, to use the first resource and the first MCS to transmit the first data, or to use the second resource and the second MCS to transmit the first data.

When the communication apparatus 1000 is configured to implement the functions of the second communication apparatus (for example, a network device) in the method embodiments shown in FIG. 2, FIG. 4, and FIG. 5: the transceiver module 1001 sends first information. The first information may indicate a first resource and a second resource, and the first information may further indicate a first MCS corresponding to the first resource and a second MCS corresponding to the second resource. In an example, when a first communication apparatus does not send second information to the second communication apparatus, the processing module 1002 is configured to: attempt to receive first data based on the first resource and the first MCS, and attempt to receive the first data based on the second resource and the second MCS. In another example, when the first communication apparatus sends the second information to the second communication apparatus, the processing module 1002 is configured to receive the first data based on the second information.

When the communication apparatus 1000 is configured to implement the functions of the first communication apparatus (for example, a terminal device) in the method embodiments shown in FIG. 6, FIG. 8, and FIG. 9: the transceiver module 1001 is configured to receive third information. The third information may indicate a third resource, and the third resource corresponds to at least two MCSs. The processing module 1002 is configured to determine a target MCS based on a data volume of second data. The target MCS is one of the at least two MCSs. The processing module 1002 is further configured to use the third resource and the target MCS to transmit the second data.

When the communication apparatus 1000 is configured to implement the functions of the second communication apparatus (for example, a network device) in the method embodiments shown in FIG. 6, FIG. 8, and FIG. 9: the transceiver module 1001 is configured to send third information. The third information may indicate a third resource, and the third resource corresponds to at least two MCSs. In an example, when a first communication apparatus does not send fourth information to the second communication apparatus, the processing module 1002 is configured to separately attempt to receive the second data on the third resource based on the at least two MCSs. In another example, when the first communication apparatus sends the fourth information to the second communication apparatus, the processing module 1002 is configured to receive the second data based on the fourth information.

When the communication apparatus 1000 is configured to implement the functions of the first communication apparatus or the second communication apparatus in the method embodiments shown in FIG. 2, FIG. 4, FIG. 5, FIG. 6, FIG. 8, and FIG. 9, for more detailed descriptions of the transceiver module 1001 and the processing module 1002, refer to the related descriptions of the first communication apparatus or the second communication apparatus in the method embodiments shown in FIG. 2, FIG. 4, FIG. 5, FIG. 6, FIG. 8, and FIG. 9. Details are not described herein again.

It should be understood that in this embodiment of this application, the transceiver module 1001 may be implemented by using a communication interface or a related circuit component of the communication interface, and the processing module 1002 may be implemented by using a processor or a related circuit component of the processor.

It should be noted that division into the modules in embodiments of this application is an example, and is merely logical function division. In actual implementation, there may be another division manner. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same concept, an embodiment of this application further provides a communication apparatus. The communication apparatus can be used in the architecture of the communication system shown in FIG. 1. For example, the communication apparatus may be an apparatus (for example, a first communication apparatus or a second communication apparatus) required for performing the communication method provided in embodiments of this application, or may be a device including the apparatus required for performing the communication method provided in embodiments of this application. Optionally, the communication apparatus may be a chip disposed in the first communication apparatus (or the second communication apparatus). When the communication apparatus is the chip disposed in the first communication apparatus (or the second communication apparatus), the communication apparatus includes a communication interface and a processor, and does not include a memory. The communication interface exists as an input/output interface, and the input/output interface is used by the chip to implement receiving/sending of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that corresponding functions of the first communication apparatus (or the second communication apparatus) are implemented. Optionally, when the chip implements the corresponding functions of the first communication apparatus (or the second communication apparatus) in the foregoing embodiments, the input/output interface may implement a receiving/sending operation performed by the first communication apparatus (or the second communication apparatus) in the foregoing embodiments, and the processor may implement an operation, other than the receiving/sending operation, performed by the first communication apparatus (or the second communication apparatus) in the foregoing embodiments. For specific related descriptions, refer to the related descriptions in the foregoing embodiments. Details are not described herein again. For example, the communication apparatus is a first communication apparatus (for example, a terminal device) or a second communication apparatus (for example, a network device). When the communication apparatus is configured to implement the technical solutions related to the first communication apparatus in the foregoing embodiments, the beneficial effects of the first communication apparatus in the foregoing method embodiments can also be implemented. When the communication apparatus is configured to implement the technical solutions related to the second communication apparatus in the foregoing embodiments, the beneficial effects of the second communication apparatus in the foregoing method embodiments can also be implemented. When the communication apparatus is configured to implement the technical solutions related to the network device in the foregoing embodiments, the beneficial effects of the network device in the foregoing method embodiments can also be implemented.

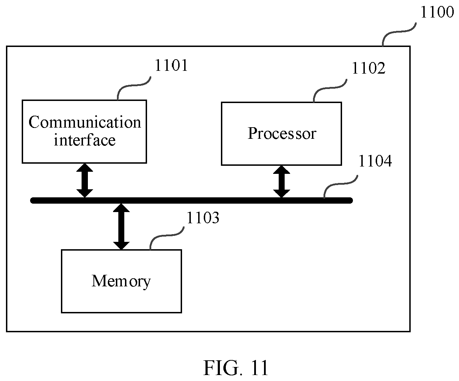

Referring to FIG. 11, a communication apparatus 1100 includes a communication interface 1101 and a processor 1102. Optionally, the communication apparatus 1100 further includes a memory 1103. The communication interface 1101, the processor 1102, and the memory 1103 are connected to each other. When the communication apparatus 1100 is configured to implement the technical solutions related to the first communication apparatus (for example, a terminal device) provided in the foregoing embodiments, the communication interface 1101 may be configured to implement the functions of the transceiver module 1001 when the transceiver module 1001 performs the technical solutions related to the first communication apparatus, and the processor 1102 is configured to implement the functions of the processing module 1002 when the processing module 1002 performs the technical solutions related to the first communication apparatus. When the communication apparatus 1100 is configured to implement the technical solutions related to the second communication apparatus (for example, a network device) provided in the foregoing embodiments, the communication interface 1101 may be configured to implement the functions of the transceiver module 1001 when the transceiver module 1001 performs the technical solutions related to the second communication apparatus, and the processor 1102 is configured to implement the functions of the processing module 1002 when the processing module 1002 performs the technical solutions related to the second communication apparatus.

Optionally, the communication interface 1101, the processor 1102, and the memory 1103 are connected to each other through a bus 1104. The bus 1104 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used to represent the bus in FIG. 11, but this does not mean that there is only one bus or only one type of bus.

The communication interface 1101 is configured to receive and send data. For example, when the communication apparatus 1100 is the terminal device 120a shown in FIG. 1, the communication interface 1101 may communicate with the RAN node 110a shown in FIG. 1, may communicate with the terminal device 120b shown in FIG. 1, or may communicate with another device (for example, another terminal device or a server) outside the architecture of the communication system shown in FIG. 1. In an example, the communication interface may be a transceiver apparatus integrated with a data receiving/sending function. In another example, the communication interface may alternatively include a transmitter and a receiver. The transmitter is configured to send data, and the receiver is configured to receive data.

Optionally, the communication interface 1101 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 1102. The receiver receives a signal, a message, information, data, or the like under control of the processor 1102.

For functions of the processor 1102, refer to the descriptions of the corresponding functions related to the first communication apparatus or the second communication apparatus in the foregoing embodiments. Details are not described herein again. The processor 1102 may be a central processing unit (central processing unit, CPU), a network processor (network processor, NP), a combination of a CPU and an NP, or the like. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1102 may implement the foregoing functions by hardware or certainly by hardware executing corresponding software.

The memory 1103 is configured to store program instructions or the like. Specifically, the program instructions may include program code. The program code includes computer operation instructions. The memory 1103 may include a random access memory (random access memory, RAM), and may further include a nonvolatile memory (non-volatile memory), for example, at least one magnetic disk memory. The processor 1102 executes the program instructions stored in the memory 1103, to implement the foregoing functions, so as to implement the steps of the method that needs to be performed by the first communication apparatus or the second communication apparatus in the foregoing embodiments.

Based on a same concept, an embodiment of this application further provides a communication system. The communication system includes a first communication apparatus (for example, a terminal device) and a second communication apparatus (for example, a network device). The first communication apparatus may be configured to implement the technical solutions related to the first communication apparatus in the foregoing embodiments, and the second communication apparatus may be configured to implement the technical solutions related to the second communication apparatus in the foregoing embodiments.

Based on a same concept, an embodiment of this application further provides a computer program product. The computer program product includes a computer program or instructions. When the computer program is or the instructions are run on a computer, the computer is enabled to perform the method provided in the foregoing embodiments.

Based on a same concept, an embodiment of this application further provides a computer-readable storage medium. The computer-readable storage medium stores a computer program or instructions. When the computer program is or the instructions are executed by a computer, the computer is enabled to perform the method provided in the foregoing embodiments.

The storage medium may be any usable medium that can be accessed by a computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can be configured to carry or store expected program code in a form of an instruction or a data structure and can be accessed by a computer.

Based on a same concept, an embodiment of this application further provides a chip. The chip may include a processor, and may further include a memory (or the chip is coupled to a memory). The chip executes program instructions in the memory, to perform the method provided in the foregoing embodiments. The term "coupled" means that two components are directly or indirectly combined with each other. For example, coupling may mean an electrical connection between the two components.

Based on a same concept, an embodiment of this application further provides a chip system. The chip system includes a processor, configured to support a computer apparatus in implementing the functions related to the first communication apparatus (for example, a terminal device) or the second communication apparatus (for example, a network device) in the foregoing embodiments. In a possible design, the chip system further includes a memory, and the memory is configured to store a program and data that are necessary for the computer apparatus. The chip system may include a chip, or may include a chip and another discrete component.

All or some of the methods in embodiments of this application may be implemented by software, hardware, firmware, or any combination thereof. When software is used to implement the methods, all or some of the methods may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

Steps of the methods described in embodiments of this application may be directly embedded into hardware, a software unit executed by a processor, or a combination thereof. The software unit may be stored in a RAM, a ROM, an EEPROM, a register, a hard disk, a removable magnetic disk, a CD-ROM, or a storage medium in any other form in the art. For example, the storage medium may be connected to the processor, so that the processor may read information from the storage medium and may write information to the storage medium. Optionally, the storage medium may alternatively be integrated into the processor. The processor and the storage medium may be disposed in an ASIC.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be loaded onto a computer or another programmable data processing device, so that a series of operations and steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. In this way, this application is also intended to cover these modifications and variations to this application provided that they fall within the scope of the claims of this application and equivalent technologies thereof.

## Claims

1. A modulation and coding scheme configuration-based communication method, comprising:
receiving first information, wherein the first information indicates a first resource and a second resource, and the first information further indicates a first modulation and coding scheme MCS corresponding to the first resource and a second MCS corresponding to the second resource; and
determining, based on a data volume of first data, to use the first resource and the first MCS to transmit the first data, or to use the second resource and the second MCS to transmit the first data.

2. The method according to claim 1, wherein determining, based on the data volume of the first data, to use the first resource and the first MCS to transmit the first data comprises:
when the data volume of the first data is less than a first threshold, determining to use the first resource and the first MCS to transmit the first data.

3. The method according to claim 1, wherein determining, based on the data volume of the first data, to use the second resource and the second MCS to transmit the first data comprises:
when the data volume of the first data is greater than the first threshold, determining to use the second resource and the second MCS to transmit the first data.

4. The method according to claim 2 or 3, wherein the method further comprises:
determining a bearable data volume of the first resource based on the first resource and the first MCS; and
determining the first threshold based on the bearable data volume of the first resource.

5. The method according to any one of claims 1 to 4, wherein the method further comprises:
sending second information, wherein the second information indicates one or more of the following: use statuses of the first resource and the second resource, and use statuses of the first MCS and the second MCS.

6. The method according to claim 5, wherein the method further comprises:
determining, based on a code rate corresponding to a reference MCS and a scale factor corresponding to the reference MCS, a first code rate corresponding to the second information, wherein the reference MCS is the first MCS or the second MCS; and
sending the second information comprises:
sending the second information based on the first code rate.

7. The method according to any one of claims 1 to 6, wherein the second resource comprises the first resource, and a bearable data volume of the second resource is greater than the bearable data volume of the first resource.

8. The method according to any one of claims 1 to 7, wherein the first MCS is higher than the second MCS.

9. A modulation and coding scheme configuration-based communication method, comprising:
receiving third information, wherein the third information indicates a third resource, and the third resource corresponds to at least two modulation and coding schemes MCSs;
determining a target MCS based on a data volume of second data, wherein the target MCS is one of the at least two MCSs; and
using the third resource and the target MCS to transmit the second data.

10. The method according to claim 9, wherein the at least two MCSs comprise a third MCS and a fourth MCS, and the third MCS is higher than the fourth MCS; and
determining the target MCS based on the data volume of the second data comprises:
when the data volume of the second data is less than a second threshold, determining that the target MCS is the fourth MCS.

11. The method according to claim 9, wherein the at least two candidate MCSs comprise a third MCS and a fourth MCS, and the third MCS is higher than the fourth MCS; and
determining the target MCS based on the data volume of the second data comprises:
when the data volume of the second data is greater than the second threshold, determining that the target MCS is the third MCS.

12. The method according to claim 10 or 11, wherein the method further comprises:
determining a bearable data volume of the third resource based on the third resource and the third MCS or the fourth MCS; and
determining the second threshold based on the bearable data volume of the third resource.

13. The method according to any one of claims 9 to 12, wherein the method further comprises:
sending fourth information, wherein the fourth information indicates use statuses of the at least two MCSs.

14. The method according to claim 13, wherein the method further comprises:
determining, based on a code rate corresponding to a reference MCS and a scale factor corresponding to the reference MCS, a second code rate corresponding to the fourth information, wherein the reference MCS is one of the at least two MCSs; and
sending the fourth information comprises:
sending the fourth information based on the second code rate.

15. A communication apparatus, comprising a transceiver module and a processing module, wherein
the transceiver module is configured to receive first information, wherein the first information indicates a first resource and a second resource, and the first information further indicates a first modulation and coding scheme MCS corresponding to the first resource and a second MCS corresponding to the second resource; and
the processing module is configured to determine, based on a data volume of first data, to use the first resource and the first MCS to transmit the first data, or to use the second resource and the second MCS to transmit the first data.

16. The apparatus according to claim 15, wherein when determining, based on the data volume of the first data, to use the first resource and the first MCS to transmit the first data, the processing module is specifically configured to:
when the data volume of the first data is less than a first threshold, determine to use the first resource and the first MCS to transmit the first data.

17. The apparatus according to claim 15, wherein when determining, based on the data volume of the first data, to use the second resource and the second MCS to transmit the first data, the processing module is specifically configured to:
when the data volume of the first data is greater than the first threshold, determine to use the second resource and the second MCS to transmit the first data.

18. The apparatus according to claim 16 or 17, wherein the processing module is further configured to:
determine a bearable data volume of the first resource based on the first resource and the first MCS; and
determine the first threshold based on the bearable data volume of the first resource.

19. The apparatus according to any one of claims 15 to 18, wherein the transceiver module is further configured to:
send second information, wherein the second information indicates one or more of the following: use statuses of the first resource and the second resource, and use statuses of the first MCS and the second MCS.

20. The apparatus according to claim 19, wherein the processing module is further configured to:
determine, based on a code rate corresponding to a reference MCS and a scale factor corresponding to the reference MCS, a first code rate corresponding to the second information, wherein the reference MCS is the first MCS or the second MCS; and
when sending the second information, the transceiver module is specifically configured to:
send the second information based on the first code rate.

21. The apparatus according to any one of claims 15 to 20, wherein the second resource comprises the first resource, and a bearable data volume of the second resource is greater than the bearable data volume of the first resource.

22. The apparatus according to any one of claims 15 to 21, wherein the first MCS is higher than the second MCS.

23. A communication apparatus, comprising a transceiver module and a processing module, wherein
the transceiver module is configured to receive third information, wherein the third information indicates a third resource, and the third resource corresponds to at least two modulation and coding schemes MCSs;
the processing module is configured to determine a target MCS based on a data volume of second data, wherein the target MCS is one of the at least two MCSs; and
the processing module is further configured to use the third resource and the target MCS to transmit the second data.

24. The apparatus according to claim 23, wherein the at least two MCSs comprise a third MCS and a fourth MCS, and the third MCS is higher than the fourth MCS; and
when determining the target MCS based on the data volume of the second data, the processing module is specifically configured to:
when the data volume of the second data is less than a second threshold, determine that the target MCS is the fourth MCS.

25. The apparatus according to claim 23, wherein the at least two MCSs comprise a third MCS and a fourth MCS, and the third MCS is higher than the fourth MCS; and
when determining the target MCS based on the data volume of the second data, the processing module is specifically configured to:
when the data volume of the second data is greater than the second threshold, determine that the target MCS is the third MCS.

26. The apparatus according to claim 24 or 25, wherein the processing module is further configured to:
determine a bearable data volume of the third resource based on the third resource and the third MCS or the fourth MCS; and
determine the second threshold based on the bearable data volume of the third resource.

27. The apparatus according to any one of claims 23 to 26, wherein the transceiver module is further configured to:
send fourth information, wherein the fourth information indicates use statuses of the at least two MCSs.

28. The apparatus according to claim 27, wherein the processing module is further configured to:
determine, based on a code rate corresponding to a reference MCS and a scale factor corresponding to the reference MCS, a second code rate corresponding to the fourth information, wherein the reference MCS is one of the at least two MCSs; and
when sending the fourth information, the transceiver module is specifically configured to:
send the fourth information based on the second code rate.

29. A computer-readable storage medium, wherein the computer-readable storage medium stores a computer program or instructions, and when the computer program is or the instructions are executed by a computer, the computer is enabled to perform the method according to any one of claims 1 to 8 or the method according to any one of claims 9 to 14.

30. A computer program product, wherein the computer program product comprises a computer program or instructions, and when the computer program is or the instructions are run on a computer, the computer is enabled to perform the method according to any one of claims 1 to 8 or the method according to any one of claims 9 to 14.
